# EUROPEAN PATENT APPLICATION

(11) **EP 4 443 913 A1**
(43) Date of publication of application: **09.10.2024**
(21) Application number: 22900614.3
(22) Date of filing: 01.12.2022
(51) Int. Cl.: H04W 4/02

(54) **POSITIONING METHOD AND APPARATUS, TERMINAL, AND COMMUNICATION DEVICE**

(30) Priority: 01.12.2021 CN 202111456945
(71) Applicant: Vivo Mobile Communication Co., Ltd., Dongguan, Guangdong 523863 (CN)
(72) Inventor: WANG, Yuanyuan, Dongguan, Guangdong 523863 (CN); SI, Ye, Dongguan, Guangdong 523863 (CN); WU, Huaming, Dongguan, Guangdong 523863 (CN); PENG, Shuyan, Dongguan, Guangdong 523863 (CN)
(74) Representative: Conti, Marco
(86) International application number: PCT/CN2022/135901
(87) International publication number: WO 2023/098810

(57) **Abstract**

This application discloses a positioning method and apparatus, a terminal, and a communication device, and pertains to the field of communication technologies. The positioning method in embodiments of this application includes: measuring, by a first terminal, a physical sidelink SL positioning reference signal sent by a second terminal; and sending, by the first terminal, first information to a target communication device based on measurement on the SL positioning reference signal, where the first information includes at least one of the following: line-of-sight LOS indication information; measurement information of the SL positioning reference signal; and location-related information; and the target communication device is the second terminal, a preset terminal, a base station device, or a core network device.

## Description

### CROSS-REFERENCE TO RELATED APPLICATIONS

This application claims priority to Chinese Patent No. 202111456945.0, filed on December 01, 2021 and entitled "POSITIONING METHOD AND APPARATUS, TERMINAL, AND COMMUNICATION DEVICE", which is incorporated herein by reference in its entirety.

### TECHNICAL FIELD

This application pertains to the field of communication technologies, and specifically relates to a positioning method and apparatus, a terminal, and a communication device.

### BACKGROUND

In a wireless communication system, a positioning reference signal (Positioning Reference Signal, PRS) is a reference signal used for assisting a terminal in performing positioning.

However, in the prior art, a positioning manner based on a physical sidelink (Sidelink, SL) is not supported. In addition, there is no corresponding solution to the problem of inaccurate measurement or (Non-Line-of-Sight, NLOS) in a physical sidelink.

### SUMMARY

Embodiments of this application provide a positioning method and apparatus, a terminal, and a communication device, to implement a positioning manner based on a physical sidelink, and optimize positioning performance of a physical sidelink because accurate positioning cannot be performed due to the problem of inaccurate measurement or NLOS in a physical sidelink.

According to a first aspect, a positioning method is provided, where the method includes:
measuring, by a first terminal, a physical sidelink SL positioning reference signal sent by a second terminal; and
sending, by the first terminal, first information to a target communication device based on measurement on the SL positioning reference signal, where
the first information includes at least one of the following:
   line-of-sight LOS indication information;
   measurement information of the SL positioning reference signal; and
   location-related information; and
   the target communication device is the second terminal, a preset terminal, a base station device, or a core network device.

According to a second aspect, a positioning method is provided, including:
receiving, by a target communication device, first information, where the first information is sent by a first terminal based on measurement on an SL positioning reference signal sent by a second terminal, where
the first information includes at least one of the following:
   line-of-sight LOS indication information;
   measurement information of the SL positioning reference signal; and
   location-related information; and
   the target communication device is the second terminal, a preset terminal, a base station device, or a core network device.

According to a third aspect, a positioning apparatus is provided, including:
a measurement module, configured to measure a physical sidelink SL positioning reference signal sent by a second terminal; and
a first sending module, configured to send first information to a target communication device based on measurement on the SL positioning reference signal, where
the first information includes at least one of the following:
   line-of-sight LOS indication information;
   measurement information of the SL positioning reference signal; and
   location-related information; and
   the target communication device is the second terminal, a preset terminal, a base station device, or a core network device.

According to a fourth aspect, a positioning apparatus is provided, including:a second receiving module, configured to receive first information, where the first information is sent by a first terminal based on measurement on an SL positioning reference signal sent by a second terminal, where
the first information includes at least one of the following:
line-of-sight LOS indication information;
measurement information of the SL positioning reference signal; and
location-related information; and
the target communication device is the second terminal, a preset terminal, a base station device, or a core network device.

According to a fifth aspect, a first terminal is provided. The terminal includes a processor and a memory, the memory stores a program or an instruction that can be run on the processor, and the program or the instruction is executed by the processor to implement the steps of the method according to the first aspect.

According to a sixth aspect, a first terminal is provided, including a processor and a communication interface, where the processor is configured to:
measure a physical sidelink SL positioning reference signal sent by a second terminal; and
the communication interface is configured to:
   send first information to a target communication device based on measurement on the SL positioning reference signal, where
   the first information includes at least one of the following:
      line-of-sight LOS indication information;
      measurement information of the SL positioning reference signal; and
      location-related information; and
      the target communication device is the second terminal, a preset terminal, a base station device, or a core network device.

According to a seventh aspect, a target communication device is provided. The communication device includes a processor and a memory, the memory stores a program or an instruction that can be run on the processor, and the program or the instruction is executed by the processor to implement the steps of the method according to the second aspect.

According to an eighth aspect, a target communication device is provided, including a processor and a communication interface, where the communication interface is configured to:
receive first information, where the first information is sent by a first terminal based on measurement on an SL positioning reference signal sent by a second terminal, where
the first information includes at least one of the following:
   line-of-sight LOS indication information;
   measurement information of the SL positioning reference signal; and
   location-related information; and
   the target communication device is the second terminal, a preset terminal, a base station device, or a core network device.

According to a ninth aspect, a positioning system is provided, including a terminal and a network side device. The terminal may be configured to perform the steps of the positioning method according to the first aspect, and the communication device may be configured to perform the steps of the positioning method according to the second aspect.

According to a tenth aspect, a readable storage medium is provided. The readable storage medium stores a program or an instruction, and the program or the instruction is executed by a processor to implement the steps of the method according to the first aspect or the steps of the method according to the second aspect.

According to an eleventh aspect, a chip is provided. The chip includes a processor and a communication interface, the communication interface is coupled to the processor, and the processor is configured to run a program or an instruction to implement the method according to the first aspect or the method according to the second aspect.

According to a twelfth aspect, a computer program/program product is provided. The computer program/program product is stored in a storage medium, and the computer program/program product is executed by at least one processor to implement the steps of the method according to the first aspect or the steps of the method according to the second aspect.

In the embodiments of this application, the physical sidelink SL positioning reference signal sent by the second terminal is measured, and one or more of the line-of-sight LOS indication information, the measurement information of the SL positioning reference signal, and the location-related information are sent to the target communication device based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

### BRIEF DESCRIPTION OF DRAWINGS

FIG. 1 is a block diagram of a wireless communication system to which the embodiments of this application are applicable;
FIG. 2 is a schematic diagram of a sidelink according to an embodiment of this application;
FIG. 3 is a schematic diagram of a detection and resource selection or reselection procedure according to an embodiment of this application;
FIG. 4 is a first schematic flowchart of a positioning method according to an embodiment of this application;
FIG. 5 is a second schematic flowchart of a positioning method according to an embodiment of this application;
FIG. 6 is a first schematic structural diagram of a positioning apparatus according to an embodiment of this application;
FIG. 7 is a second schematic structural diagram of a positioning apparatus according to an embodiment of this application;
FIG. 8 is a schematic structural diagram of a communication device according to an embodiment of this application;
FIG. 9 is a schematic structural diagram of hardware of a first terminal according to an embodiment of this application; and
FIG. 10 is a schematic structural diagram of a target communication device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

It should be noted that technologies described in the embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. The following describes a New Radio (New Radio, NR) system for example purposes, and NR terms are used in most of the following descriptions. These technologies can also be applied to applications other than an NR system application, such as a 6th generation (6th Generation, 6G) communication system.

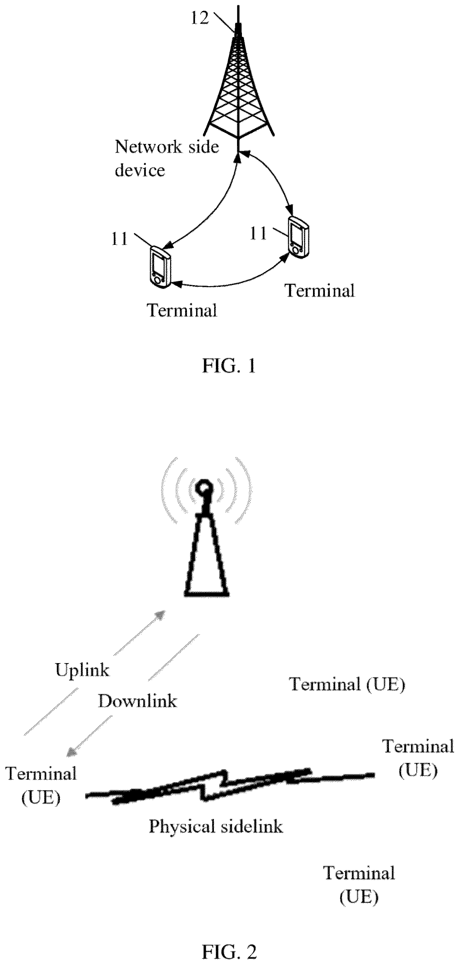

FIG. 1 is a block diagram of a wireless communication system to which the embodiments of this application are applicable. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television, a washing machine, or a furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, and a smart chain), a smart wrist strap, a smart dress, and the like. It should be noted that a specific type of the terminal 11 is not limited in the embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. As long as a same technical effect is achieved, the base station is not limited to a specified technical term. It should be noted that, in this application, only a base station in an NR system is used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rule function unit (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a location manage function LMF (location manage function), an E-SMLC, an NWDAF (network data analytics function), and the like. It should be noted that, in the embodiments of this application, only a core network device in an NR system is used as an example for description, and a specific type of the core network device is not limited.

To better describe the embodiments of this application, the following content is first described:
(1) Internet of Vehicles (vehicle to everything, V2X)
   A Long Term Evolution system supports sidelink (sidelink, or a bypass link, a side link, or an edge link) transmission. FIG. 2 is a schematic diagram of a sidelink according to an embodiment of this application. As shown in FIG. 2, direct data transmission is not performed between terminal user equipment (User Equipment, UE) by using a network device. That is, data is directly transmitted between terminals (User Equipment, UE) at a physical layer. The LTE sidelink is based on broadcasting for communication. Although the LTE sidelink can be used to support basic security communication of Internet of Vehicles, the LTE sidelink is not applicable to other more advanced V2X services. A 5G NR system will support more advanced designs of sidelink transmission, such as unicast, multicast, or broadcast, thereby supporting services of more comprehensive types.
(2) Resource allocation; NR V2X defines two types of resource allocation modes, where one is mode 1 for scheduling resources for a base station; and the other type is a mode 2 in which UE determines which resource to use for transmission. In this case, resource information may be from a broadcast message or preconfigured information of the base station. If the UE works in a range of the base station and has an RRC connection to the base station, the mode 1 and/or the mode 2 may be used. If the UE works in a range of the base station but has no RRC connection to the base station, the UE can only work in the mode 2. If the UE is out of the range of the base station, the UE can work only in the mode 2 and perform V2X transmission based on the preconfigured information.

A specific working manner in the mode 2 is as follows:
(1) After resource selection is triggered, TX UE first determines a resource selection window, where a lower boundary of the resource selection window is in a T1 time after the resource selection is triggered, and an upper boundary of the resource selection is in a T2 time after the resource selection is triggered. T2 is a value selected in a PDB (packet delay budget) transmitted in a TB by the UE, and T2 is not earlier than T1.
(2) Before the resource selection, the UE needs to determine a candidate resource set (candidate resource set) for the resource selection, and compare an RSRP measured on a resource within the resource selection window with a corresponding RSRP threshold. If the RSRP is less than the RSRP threshold, the resource may be included in the candidate resource set.

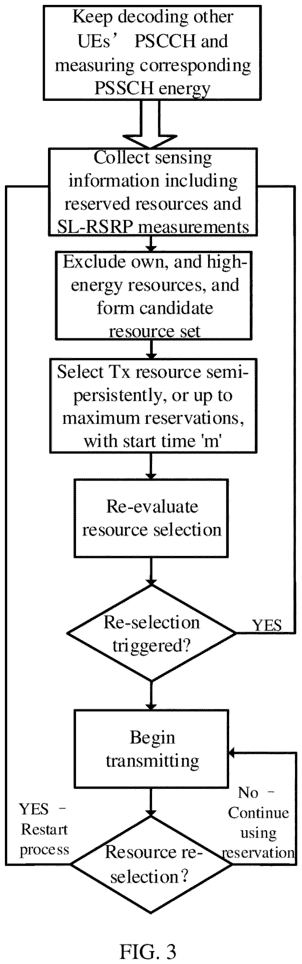

3) After the resource set is determined, the UE randomly selects a transmission resource from the candidate resource set. In addition, the UE may reserve a transmission resource for subsequent transmission after this transmission. FIG. 3 is a schematic diagram of a detection and resource selection or reselection procedure according to an embodiment of this application. A specific procedure of detection and resource selection or reselection is shown in FIG. 3.

(3) NR positioning is positioning performed on a UU interface based on signal measurement between a base station and UE. In an enhancement phase of the NR positioning, reporting of LOS and NLOS indication information and reporting of a multi-path measurement result are supported. However, it is not clear how to implement it in a sidelink.

Therefore, according to a positioning method and apparatus, a terminal, and a communication device provided in the embodiments of this application, a manner of performing terminal positioning based on a physical sidelink positioning reference signal is determined, thereby effectively improving positioning accuracy. In addition, reporting of LOS and NLOS indication information is considered, thereby effectively reducing a measurement error.

With reference to the accompanying drawings, the following describes in detail a positioning method and apparatus, a terminal, and a communication device provided in the embodiments of this application by using some embodiments and application scenarios thereof.

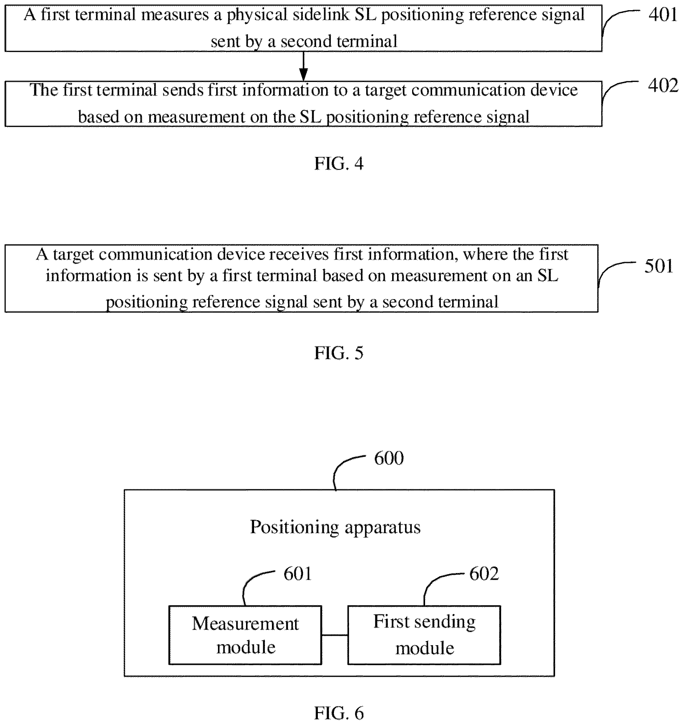

FIG. 4 is a first schematic flowchart of a positioning method according to an embodiment of this application. As shown in FIG. 4, the method includes the following step 401 and step 402.

Step 401: A first terminal measures a physical sidelink SL positioning reference signal sent by a second terminal.

Step 402: The first terminal sends first information to a target communication device based on measurement on the SL positioning reference signal.

The first information includes at least one of the following:
line-of-sight LOS indication information;
measurement information of the SL positioning reference signal; and
location-related information; and
the target communication device is the second terminal, a preset terminal, a base station device, or a core network device.

Currently, a communication system does not support sidelink positioning. Therefore, the communication system cannot determine how to implement positioning based on a physical sidelink SL positioning reference signal in an SL scenario. In addition, it is not clear whether LOS/NLOS identification should be supported and whether an NLOS result should be fed back after the sidelink positioning is supported.

Therefore, in this embodiment of this application, the first terminal may measure or receive the physical sidelink SL positioning reference signal sent by the second terminal, and complete the measurement.

Optionally, the SL positioning reference signal may be an SL signal used for positioning.

Optionally, the SL positioning reference signal may be multiplexing of an NR positioning signal, or enhancement of an existing SL signal, such as a reference signal (CSI Reference Signal, CSI-RS), a sidelink synchronization signal block (Sidelink Synchronization Signal Block, S-SSB), a tracking reference signal (Tracking Reference Signal, TRS), or a demodulation reference signal (Demodulation Reference Signal, DMRS).

Optionally, the SL positioning reference signal may be an NR SL positioning signal specifically defined for positioning, and the signal includes but is not limited to a gold code sequence, an m sequence, and a ZC sequence.

Optionally, the SL positioning reference signal may be a plurality of types of signals.

The first terminal is a measurement terminal, and the second terminal is a terminal that sends the physical sidelink SL positioning reference signal.

Optionally, a terminal that needs to be located may be referred to as a target terminal.

Optionally, the second terminal may be a target terminal.

Optionally, the first terminal may be a target terminal, and the second terminal may be a terminal that sends a plurality of SL positioning reference signals.

Optionally, the second terminal may not be a target terminal, and the second terminal sends the to-be-measured physical sidelink SL positioning reference signal to the first terminal to assist in positioning of the target terminal.

Optionally, after completing measurement on the SL positioning reference signal, the first terminal may report or feed back the first information to the target communication device based on the measurement.

Optionally, the target communication device that receives the first information may be the second terminal.

Optionally, the target communication device that receives the first information may be a network side device, such as a base station device or a core network device.

Optionally, the target communication device that receives the first information may be a preset terminal that is different from the first terminal and different from the second terminal. For example, a preset terminal may be preset or set to receive the first information.

Optionally, the target communication device may receive the first information, and obtain one or more of the line-of-sight LOS indication information, the measurement information of the SL positioning reference signal, and the location-related information, to implement positioning of a target terminal.

Specifically, in this embodiment of this application, in an SL scenario, the physical sidelink SL positioning reference signal sent by the second terminal is measured, and one or more of the line-of-sight LOS indication information, the measurement information of the SL positioning reference signal, and the location-related information are sent to the target communication device based on the measurement, so that a positioning method in the SL scenario is specified. In this way, in the communication system, the positioning method in the SL scenario can be performed based on this embodiment of this application, and positioning enhancement in the SL scenario is specified, that is, reporting of LOS and NLOS indication information is supported, thereby implementing positioning enhancement in the SL scenario and effectively reducing a measurement error caused by NLOS in the SL scenario.

In this embodiment of this application, the physical sidelink SL positioning reference signal sent by the second terminal is measured, and one or more of the line-of-sight LOS indication information, the measurement information of the SL positioning reference signal, and the location-related information are sent to the target communication device based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

Optionally, in a case that the target communication device is the second terminal or a preset terminal, the first information is included in at least one of the following:
a physical sidelink control channel (Physical SideLink Control Channel, PSCCH), a physical sidelink feedback channel (Physical SideLink Feedback Channel, PSFCH), a physical sidelink shared channel (Physical SideLink Shared Channel, PSSCH), sidelink control information (Sidelink Control Information, SCI), a Medium Access Control control element (Medium Access Control Control Element, MAC CE), PC5 radio resource control (PC5-Radio Resource Control, PC5-RRC), a PC5 positioning protocol (PC5-LTE Positioning Protocol, PC5-LPP), or second sidelink control information SCI.

Specifically, if the target communication device is the second terminal or a preset terminal, the first information may be carried in any one or more of the following:
a physical sidelink control channel PSCCH, a physical sidelink feedback channel PSFCH, a physical sidelink shared channel PSSCH, sidelink control information SCI, a Medium Access Control control element MAC CE, PC5 radio resource control PC5-RRC, a PC5 positioning protocol PC5-LPP, or second sidelink control information SCI.

Optionally, when the first information is carried in one or more of the foregoing items, a part of the first information may be carried in one item, and another part of the first information may be carried in another item. The plurality of items may be transmitted at the same time, or may be transmitted at different moments.

Optionally, in a case that the target communication device is a base station device or a core network device, the first information is included in at least one of the following:
uplink control information (Uplink Control Information, UCI), a physical uplink control channel (Physical Uplink Control Channel, PUCCH), a physical uplink shared channel (Physical Uplink Shared Channel, PUSCH), a Media Access Control control element MAC CE, radio resource control RRC, or a positioning protocol LPP.

Specifically, if the target communication device is a base station device or a core network device, the first information may be carried in any one or more of the following:
uplink control information UCI, a physical uplink control channel PUCCH, a physical uplink shared channel PUSCH, a Media Access Control control element MAC CE, radio resource control RRC, or a positioning protocol LPP.

Optionally, when the first information is carried in one or more of the foregoing items, a part of the first information may be carried in one item, and another part of the first information may be carried in another item. The plurality of items may be transmitted at the same time, or may not be transmitted at the same time.

Optionally, the measurement information of the SL positioning reference signal includes at least one of the following:
identification information and a measurement result of an SL positioning reference signal associated with the identification information, where
the identification information includes at least one of the following:
   identification information of at least one first terminal;
   identification information of at least one second terminal; and
   identification information of at least one SL positioning reference signal.

Optionally, the measurement information of the SL positioning reference signal may include any one or more of the following:
identification information; or
a measurement result of an SL positioning reference signal associated with the identification information.

Optionally, the measurement information of the SL positioning reference signal may include identification information, where
the identification information may include any one or more of the following:
identification information of at least one first terminal; or
identification information of at least one second terminal; or
identification information of at least one SL positioning reference signal.

Optionally, the measurement information of the SL positioning reference signal may include the measurement result of the SL positioning reference signal associated with the identification information, for example, may include any one or more of the following:
a measurement result of an SL positioning reference signal associated with at least one first terminal; or
a measurement result of an SL positioning reference signal associated with at least one second terminal; or
a measurement result of an SL positioning reference signal associated with at least one SL positioning reference signal.

Optionally, in an embodiment, the measurement information of the SL positioning reference signal may include measurement results of SL positioning reference signals associated with a plurality of SL positioning reference signals, and may even include measurement results of SL positioning reference signals associated with SL positioning reference signals associated with a plurality of second terminals. Further, each measurement result is associated with one piece of timestamp information.

Optionally, the measurement result includes at least one of the following:
angle information, where the angle information includes an angle of arrival measurement result and/or an angle of departure measurement result;
time information, where the time information includes at least one of a reference signal time difference measurement result, a round-trip delay measurement result, and a reference signal arrival time; and
energy information, where the energy information includes a reference signal received power RSRP and/or a received signal strength indicator RSSI.

Optionally, the measurement result may include any one or more of the following:
angle information, where the angle information includes an angle of arrival measurement result and/or an angle of departure measurement result; or
time information, where the time information includes at least one of a reference signal time difference measurement result, a round-trip delay measurement result, and a reference signal arrival time; or
energy information, where the energy information includes a reference signal received power RSRP and/or a received signal strength indicator RSSI.

For example, a measurement result associated with one SL positioning reference signal may include:
an angle of arrival measurement result and/or an angle of departure measurement result corresponding to the SL positioning reference signal;
any one or more of a reference signal time difference measurement result, a round-trip delay measurement result, and a reference signal arrival time corresponding to the SL positioning reference signal; and
a reference signal received power RSRP and/or a received signal strength indicator RSSI corresponding to the SL positioning reference signal.

Optionally, one measurement result is associated with at least one piece of LOS indication information; or one piece of identification information is associated with at least one piece of LOS indication information.

Optionally, in an embodiment, measurement information of one SL positioning reference signal is associated with at least one piece of LOS indication information; or measurement information of all SL positioning reference signals associated with one second terminal is associated with one piece of LOS indication information.

Optionally, one measurement result may be associated with at least one piece of LOS indication information, and both may be reported together. The LOS indication information is indication information of LOS-related information for the measurement result.

For example, a measurement result associated with one SL positioning reference signal may be associated with LOS indication information corresponding to the SL positioning reference signal, and the LOS indication information may indicate LOS-related information corresponding to the measurement result.

Optionally, one piece of identification information may be associated with at least one piece of LOS indication information, and both may be reported together. The indication information is indication information of LOS-related information for the identification information.

Optionally, in an embodiment, identification information of one second terminal is associated with one piece of LOS indication information.

Optionally, in an embodiment, identification information of one measurement result is associated with one piece of LOS indication information.

Optionally, in an embodiment, identification information of one SL positioning reference signal is associated with one piece of LOS indication information.

Optionally, in an embodiment, identification information of one panel or group is associated with one piece of LOS indication information.

For example, one piece of identification information (for example, identification information of the second terminal) may be associated with LOS indication information corresponding to the second terminal, and the LOS indication information may indicate a measurement result associated with the identification information (which represents the second terminal), that is, LOS-related information for the identification information.

For example, one piece of identification information (for example, identification information of a target terminal), and the LOS indication information may indicate a measurement result associated with the identification information (which represents the second terminal), that is, LOS-related information for the identification information.

For example, one piece of identification information (for example, identification information of an SL positioning reference signal), and the LOS indication information may indicate a measurement result of the identification information of the SL positioning reference signal, that is, LOS-related information for the identification information.

For example, a plurality of measurement results that may be associated with one piece of terminal identification information may be associated with LOS indication information corresponding to the terminal identification information, and the LOS indication information may indicate whether the plurality of measurement results include an LOS path. The LOS indication information may further indicate a probability that the plurality of measurement results include an LOS path.

Specifically, the identification information may represent a device or a path uniquely indicated by the identification information. That identification information is associated with one piece of information may mean that a device or a path represented by the identification information is associated with the information.

Optionally, the at least one piece of LOS indication information is used to indicate one of the following:
whether the measurement result includes an LOS path;
a probability that the measurement result includes an LOS path;
whether an LOS path is included between the identification information and a target terminal;
whether an LOS path is included between the identification information and the first terminal;
a probability that an LOS path is included between the identification information and the second terminal; and
a probability that an LOS path is included between the identification information and the first terminal.

Optionally, at least one piece of LOS indication information associated with one measurement result may be used to indicate any one or more of the following:
whether the measurement result includes an LOS path; or
a probability that the measurement result includes an LOS path.

For example, a measurement result associated with one SL positioning reference signal may be associated with LOS indication information corresponding to the SL positioning reference signal, and the LOS indication information may indicate whether the measurement result includes an LOS path; or the LOS indication information may indicate a probability that the measurement result includes an LOS path.

Optionally, at least one piece of LOS indication information associated with one piece of identification information may be used to indicate any one or more of the following:
whether an LOS path is included between the identification information and a target terminal; or
whether an LOS path is included between the identification information and the first terminal; or
a probability that an LOS path is included between the identification information and the second terminal; or
a probability that an LOS path is included between the identification information and the first terminal.

For example, one piece of identification information (for example, identification information of the second terminal) may be associated with LOS indication information corresponding to the second terminal, and the LOS indication information may indicate a measurement result associated with the identification information (which represents the second terminal), that is, a measurement result about whether an LOS path is included between the identification information and the target terminal.

For example, one piece of identification information (for example, identification information of the second terminal) may be associated with LOS indication information corresponding to the second terminal, and the LOS indication information may indicate a measurement result associated with the identification information (which represents the second terminal), that is, whether an LOS path is included between the identification information and the first terminal.

For example, one piece of identification information (for example, identification information of the second terminal) may be associated with LOS indication information corresponding to the second terminal, and the LOS indication information may indicate a measurement result associated with the identification information (which represents the second terminal), that is, a probability that an LOS path is included between the identification information and the first terminal.

Optionally, the LOS indication information includes at least one of the following:
a first bit part used to indicate LOS or non-line-of-sight NLOS;
a second bit part used to indicate an LOS probability; and
a third bit part used to indicate an LOS confidence.

Optionally, a structure of the LOS indication information may include a part, for example, may include aa first bit part used to indicate LOS or non-line-of-sight NLOS, a second bit part used to indicate an LOS probability, or a third bit part used to indicate an LOS confidence.

Optionally, a structure of the LOS indication information may include two parts, for example, may include a first bit part used to indicate LOS or non-line-of-sight NLOS and a second bit part used to indicate an LOS probability, or may include a second bit part used to indicate an LOS probability and a third bit part used to indicate an LOS confidence, or may include a first bit part used to indicate LOS or non-line-of-sight NLOS and a third bit part used to indicate an LOS confidence.

Optionally, a structure of the LOS indication information may include three parts, for example, may include a first bit part used to indicate LOS or non-line-of-sight NLOS, a second bit part used to indicate an LOS probability, and a third bit part used to indicate an LOS confidence.

Optionally, the measurement result further includes a measurement result of at least one target path.

It can be understood that each measurement includes results of a plurality of paths (a plurality of paths). According to a UE capability, some UEs can identify measurement results of paths, such as the first path and a strongest path.

Specifically, whether positioning in a current SL scenario can support feedback of a multi-path measurement result is still unclear in a communication system. Therefore, in this embodiment of this application, the measurement result may further include the measurement result of the at least one target path, so that the measurement result of the at least one target path can be accurately reported in the current communication system. In many scenarios, if a path is not directly transmitted, a reflection path affects a positioning result. If a measurement result of a target path can be accurately identified, positioning accuracy can be improved.

Optionally, N paths may be measured to obtain measurement results of the N paths, where N is a positive integer greater than or equal to 1.

Optionally, the measurement result of the target path may include at least one of the following:
angle information of the target path, where the angle information includes an angle of arrival measurement result and/or an angle of departure measurement result;
time information of the target path, where the time information includes at least one of a reference signal time difference measurement result, a round-trip delay measurement result, and a reference signal arrival time; and
energy information of the target path, where the energy information includes a reference signal received power RSRP and/or a received signal strength indicator RSSI.

Optionally, the measurement result of the target path may include at least angle information of the target path.

Optionally, the measurement result of the target path may include at least angle information and time information of the path.

Optionally, the measurement result of the target path may include at least angle information, time information, and energy information of the path.

Optionally, the measurement result of the at least one target path is associated with at least one piece of LOS indication information; and one piece of LOS indication information is associated with one target path, and different LOS indication information is associated with different target paths.

Optionally, the measurement result of the at least one target path is associated with at least one piece of LOS indication information, where one piece of LOS indication information is associated with one target path, and different LOS indication information is associated with different target paths.

For example, the measurement results of the N paths are associated with at least N pieces of LOS indication information, and a measurement result of each path is associated with respective LOS indication information.

Optionally, the measurement result of the at least one target path includes any one or more of the following:
a measurement result of an LOS path in the at least one target path;
a measurement result of the first target path in the at least one target path;
a measurement result of a target path with strongest energy in the at least one target path;
measurement results of the first N target paths in the at least one target path, where N is a positive integer;
measurement results of the first M target paths with highest energy rankings in the at least one target path, where M is a positive integer;
a measurement result of a target path whose RSRP is greater than a first threshold in the at least one target path; and
measurement results of Q target paths between the first target path and the target path with strongest energy in the at least one target path, where Q is a positive integer, and Q=N-2.

Optionally, the measurement result of the at least one target path includes at least one of the following:
a measurement result of an LOS path in the at least one target path; or
a measurement result of the first target path in the at least one target path; or
a measurement result of a target path with strongest energy in the at least one target path; or
measurement results of the first N target paths in the at least one target path, where N is a positive integer; or
measurement results of the first M target paths with highest energy rankings in the at least one target path, where M is a positive integer; or
a measurement result of a target path whose RSRP is greater than a first threshold in the at least one target path; or
measurement results of Q target paths between the first target path and the target path with strongest energy in the at least one target path, where Q is a positive integer, and Q=N-2.

Optionally, the measurement result includes the measurement result of the at least one target path, which may include any one or more of the following:
only a measurement result of an LOS path;
only a measurement result of the first target path;
only a measurement result of a strongest path;
measurement results of the first N paths;
measurement results of the strongest M paths;
a measurement result of a path whose RSRP is greater than a first threshold; and
measurement results pf paths between N-2 first paths and the strongest path.

Specifically, the first threshold may be predefined in a protocol, or may be preset, or may be pre-indicated by a network side device or an upper layer.

Optionally, the target path meets at least one of the following:
an RSRP of the target path is greater than a fourth threshold;
the target path is the first path from the second terminal to the first terminal;
the target path is the first path from the second terminal to the first terminal, where an RSTD between the first path and a serving cell of the target terminal is less than a fifth threshold;
an LOS threshold of the target path is greater than a sixth threshold; and
a reflection point of the target path is less than R, where R is a positive integer.

Optionally, before the measurement, the first terminal may further first determine a target path that needs to be measured or reported.

Optionally, the measurement condition may include: an RSRP of the to-be-measured or to-be-reported target path is greater than a fourth threshold.

Optionally, the measurement condition may include: the to-be-measured or to-be-reported target path is the first path of the second terminal.

Optionally, the measurement condition may include: the to-be-measured or to-be-reported target path is the first path of the second terminal, where an RSTD between the first path and a serving cell of the target terminal is less than a fifth threshold.

Optionally, the measurement condition may include: an LOS threshold of the to-be-measured or to-be-reported target path is greater than a sixth threshold.

Optionally, the measurement condition may include: a reflection point of the to-be-measured or to-be-reported target path is less than R, where R is a positive integer, for example, a path with a maximum of one reflection point.

Optionally, the target path may meet any one or more of the following:
an RSRP of the target path is greater than a fourth threshold; or
the target path is the first path from the second terminal to the first terminal; or
the target path is the first path from the second terminal to the first terminal, where an RSTD between the first path and a serving cell of the target terminal is less than a fifth threshold; or
an LOS threshold of the target path is greater than a sixth threshold; or
a reflection point of the target path is less than R, where R is a positive integer.

Specifically, the fourth threshold may be predefined in a protocol, or may be preset, or may be pre-indicated by a network side device or an upper layer.

Specifically, the fifth threshold may be predefined in a protocol, or may be preset, or may be pre-indicated by a network side device or an upper layer.

Specifically, the sixth threshold may be predefined in a protocol, or may be preset, or may be pre-indicated by a network side device or an upper layer.

Optionally, the method further includes:
before the measuring, by a first terminal, an SL positioning reference signal sent by a second terminal, sending, by the first terminal, first capability information to the target communication device, where the first capability information is used to indicate at least one of the following:
whether reporting of LOS identification information is supported;
whether measurement on per path is supported;
whether measurement on the first path is supported;
whether measurement on an additional path is supported;
the number of supported target paths; and
the number of supported second terminals.

Optionally, before the first terminal measures the SL positioning reference signal sent by the second terminal, the first terminal may further report first capability information, where the first capability information is used to indicate at least one of the following:
whether the first terminal supports reporting of LOS identification information; or
whether the first terminal supports measurement on per path; or
the number of target paths supported by the first terminal; or
the number of second terminals supported by the first terminal.

Optionally, in a case that the LOS indication information associated with the measurement information of the SL positioning reference signal indicates NLOS, the first information further includes reflection point information, and the reflection point information includes at least one of the following:
location information of a reflection point;
reflection angle information of a reflection point; and
incident angle information of a reflection point.

Optionally, if the measurement result includes an NLOS result, it indicates that a non-line-of-sight path exists. Therefore, the first information may further include reflection point information.

Specifically, the reflection point information includes any one or more of the following:
location information of a reflection point; or
reflection angle information of a reflection point; or
incident angle information of a reflection point.

Optionally, the NLOS result may be accompanied by reporting of one or more pieces of reflection point location information.

Optionally, the NLOS result may be accompanied by reporting of one or more pieces of reflection angle information.

Optionally, the NLOS result may be accompanied by reporting of one or more pieces of incident angle information.

Optionally, the reflection point information is associated with first identification information corresponding to the SL positioning reference signal, where
the first identification information corresponding to the SL positioning reference signal includes at least one of the following:
identification information of at least one first terminal corresponding to the SL positioning reference signal;
identification information of at least one second terminal corresponding to the SL positioning reference signal;
at least one piece of panel identification information corresponding to the SL positioning reference signal; and
identification information of at least one SL positioning reference signal corresponding to the SL positioning reference signal.

Optionally, reflection point information may be associated with first identification information corresponding to an SL positioning reference signal corresponding to an NLOS path of the reflection point.

Optionally, the first identification information corresponding to the SL positioning reference signal may include any one or more of the following:
identification information of at least one first terminal corresponding to the SL positioning reference signal; or
identification information of at least one second terminal corresponding to the SL positioning reference signal; or
at least one piece of panel identification information corresponding to the SL positioning reference signal; or
identification information of at least one SL positioning reference signal corresponding to the SL positioning reference signal.

Optionally, the measurement information of the SL positioning reference signal further includes at least one of the following:
second identification information and a measurement result of an SL positioning reference signal associated with the second identification information, where
the second identification information includes at least one of the following:
   at least one piece of panel identification information;
   at least one piece of panel location information;
   at least one piece of panel angle information; and
   at least one piece of group ID information.

Optionally, in an SL scenario, there is a vehicle-to-vehicle scenario. Because a vehicle body has a specified length, measurement results corresponding to front and rear panels of the vehicle body of the same vehicle may be different. Therefore, when the measurement results are being determined, a measurement result of a specific panel may be accurately obtained.

Optionally, in an SL multi-panel terminal, there is a specified distance between panels. Therefore, when the measurement results are being determined, a measurement result of a specific panel may be accurately obtained.

Therefore, the measurement information of the SL positioning reference signal may further include any one or more of the following:
second identification information; or
a measurement result of an SL positioning reference signal associated with the second identification information, where
the second identification information includes any one or more of the following:
   at least one piece of panel identification information;
   at least one piece of panel location information;
   at least one piece of panel angle information; and
   at least one piece of group ID information.

Optionally, the measurement result of the SL positioning reference signal associated with the second identification information includes at least one of the following:
a measurement result of an SL positioning reference signal associated with the panel identification information or the panel location information;
a measurement result of an SL positioning reference signal associated with multiple panels;
a measurement result of an SL positioning reference signal associated with a group
ID; first indication information, where the indication information is used to indicate that the measurement result of the SL positioning reference signal is for a single panel; and
second indication information, where the indication information is used to indicate that the measurement result of the SL positioning reference signal is for multiple panels.

It should be noted that the panel identification information is a reference used to distinguish different locations of a same terminal or different antenna receiving locations, and names may be different.

Optionally, the measurement result of the SL positioning reference signal associated with the second identification information may include any one or more of the following:
a measurement result of an SL positioning reference signal associated with the panel identification information or the panel location information; or
a measurement result of an SL positioning reference signal associated with multiple panels; or
a measurement result of an SL positioning reference signal associated with a group ID; or
first indication information, where the indication information is used to indicate that the measurement result of the SL positioning reference signal is for a single panel; or
second indication information, where the indication information is used to indicate that the measurement result of the SL positioning reference signal is for multiple panels.

Specifically, the measurement result may include a measurement result of a specific panel, a multi-panel measurement result, or a single-panel measurement result, to obtain a more accurate measurement result, so that a positioning result can be more accurate when a communication device completes positioning of the target terminal.

Optionally, the location-related information includes at least one of the following:
identification information and location-related information associated with the identification information, where
the identification information includes at least one of the following:
   identification information of at least one first terminal;
   identification information of at least one second terminal;
   at least one piece of panel identification information;
   at least one piece of group ID information; and
   identification information of at least one SL positioning reference signal; and
   the location-related information includes at least one of the following:
      absolute location information; and
      relative location information.

Optionally, the location-related information in the first information may include any one or more of the following:
identification information; and
location-related information associated with the identification information.

Specifically, the identification information may include any one or more of the following:
identification information of at least one first terminal; or
identification information of at least one second terminal; or
at least one piece of panel identification information; or
at least one piece of group ID information; or
identification information of at least one SL positioning reference signal.

For example, the location-related information in the first information may include identification information of one second terminal and location information of the second terminal.

Specifically, the location information may include absolute location information and/or relative location information.

For example, the location-related information in the first information may include identification information of one first terminal and location information of the first terminal.

Specifically, the identification information is used to represent a device or a path uniquely indicated by the identification information.

Optionally, the location-related information is carried in 2nd SCI.

Optionally, the location-related information is carried in a communication range.

Optionally, in a case that the location-related information is carried in 2nd SCI, the location-related information may be carried in a communication range.

Optionally, the method further includes:
sending second information to the target communication device, where the second information includes at least one of the following:
the identification information associated with the measurement result;
the location information associated with the identification information associated with the measurement result; and
location information of the target terminal, where the target terminal is a terminal whose location needs to be determined.

Optionally, the first terminal may further receive information sent by another terminal. The information sent by the another terminal is similar to the first information, that is, the another terminal measures corresponding SL positioning reference information and sends the information to the first terminal, where the target terminal is a terminal whose location needs to be determined in this measurement. In this case, the first terminal may receive and forward related information (that is, the second information) to the target communication device.

Optionally, the first terminal may further send second information to the target communication device, where the second information includes at least one of the following:
the identification information associated with the measurement result;
the location information associated with the identification information associated with the measurement result; and
location information of the target terminal, where the target terminal is a terminal whose location needs to be determined.

Optionally, the method further includes:
before the measuring, by a first terminal, an SL positioning reference signal sent by a second terminal, receiving, by the first terminal, third information sent by the target communication device, where the third information includes at least one of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

Optionally, before the first terminal measures the SL positioning reference signal sent by the second terminal, the first terminal may receive third information sent by the target communication device, where the third information may include any one or more of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

Optionally, the LOS indication information may be used to indicate whether a terminal or a base station measured by the first terminal has an LOS path.

Optionally, the LOS indication information may be used to indicate a probability that a terminal or a base station measured by the first terminal includes an LOS path.

Optionally, the LOS indication information may be used to indicate whether an SL-PRS measured by the first terminal has an LOS path.

Optionally, the LOS indication information may be used to indicate a probability that an SL-PRS measured by the first terminal includes an LOS path.

Optionally, the method further includes:
before the measuring, by a first terminal, an SL positioning reference signal sent by a second terminal, determining the second terminal, where
the second terminal meets at least one of the following:
   an Rx time difference between an SL-PRS between the second terminal and the first terminal and a serving cell of the first terminal is within a first threshold;
   an Rx time difference between the second terminal and the serving cell of the first terminal is within a second threshold;
   a synchronization time difference between the second terminal and the first terminal is within a third threshold;
   the second terminal and the first terminal belong to a same synchronization clock;
   a measurement result RSRP of the second terminal is greater than a second threshold; and
   a measurement result RSTD of the second terminal and the serving cell is less than a third threshold.

Optionally, before the first terminal measures the SL positioning reference signal sent by the second terminal, the second terminal may be first determined.

Specifically, the first terminal may determine the second terminal based on at least one of the following conditions:
an Rx time difference between an SL-PRS between the second terminal and the first terminal and a serving cell of the first terminal is within a first threshold; or
an Rx time difference between the second terminal and the serving cell of the first terminal is within a second threshold; or
a synchronization time difference between the second terminal and the first terminal is within a third threshold; or
the second terminal and the first terminal belong to a same synchronization clock; or
a measurement result RSRP of the second terminal is greater than a second threshold; or
a measurement result RSTD of the second terminal and the serving cell is less than a third threshold.

Specifically, the second threshold may be predefined in a protocol, or may be preset, or may be pre-indicated by a network side device or an upper layer, or may be determined through reporting based on a capability of the first terminal, or may be indicated by another node.

Specifically, the third threshold may be predefined in a protocol, or may be preset, or may be pre-indicated by a network side device or an upper layer, or may be determined through reporting based on a capability of the first terminal, or may be indicated by another node.

Optionally, related information of the foregoing serving cell may be from a serving gNB or related UE.

Optionally, the sending, by the first terminal, first information to a target communication device based on measurement on the SL positioning reference signal includes:
sending, only in a case that an RSRP of the measured SL positioning reference signal is greater than or equal to a threshold N, the first information associated with the SL positioning reference signal; or
sending the first information only in a case that RSRPs of all measured SL positioning reference signals are greater than or equal to the threshold.

Optionally, the first information associated with the SL positioning reference signal may be sent only in a case that an RSRP of the measured SL positioning reference signal is greater than or equal to a threshold N.

Optionally, the first information associated with the SL positioning reference signal may not be sent in a case that an RSRP of the measured SL positioning reference signal is less than the threshold N.

Optionally, the first information may be sent only in a case that RSRPs of all measured SL positioning reference signals are greater than or equal to the threshold.

Optionally, the first information may not be sent in a case that RSRPs of all measured SL positioning reference signals are less than the threshold.

Optionally, the method further includes:
sending third information to the target communication device in a case that the RSRPs of all the measured SL positioning reference signals are less than the threshold N, where
the third information includes at least one of the following:
   measurement failure indication information;
   information indicating that measured energy is less than a threshold; and
   NACK indication information.

Optionally, in a case that the RSRPs of all the measured SL positioning reference signals are less than the threshold N, the first information may not be sent, but third information is sent to the target communication device, where
the third information includes at least one of the following:
measurement failure indication information; or
information indicating that measured energy is less than a threshold; or
NACK indication information.

Optionally, the sending, by the first terminal, first information to a target communication device based on measurement on the SL positioning reference signal includes at least one of the following:
in a case that a zone ID of the target terminal and a zone ID of the second terminal meet a first condition, sending, by the first terminal, the first information to the target communication device; or
in a case that a communication range of the target terminal and a communication range of the second terminal meet a second condition, sending, by the first terminal, the first information to the target communication device; or
in a case that a zone ID of the first terminal and a zone ID of the second terminal meet a first condition, sending, by the first terminal, the first information to the target communication device; or
in a case that a communication range of the first terminal and a communication range of the second terminal meet a second condition, sending, by the first terminal, the first information to the target communication device.

Optionally, in a case that a zone ID of the target terminal and a zone ID of the second terminal meet a first condition, the first terminal sends the first information to the target communication device.

That a zone ID of the target terminal and a zone ID of the second terminal meet a first condition may mean that the zone ID of the target terminal is equal to the zone ID of the second terminal.

That a zone ID of the target terminal and a zone ID of the second terminal meet a first condition may mean that a communication range corresponding to the zone ID of the target terminal and a communication range corresponding to the zone ID of the second terminal are the same or are different within a preset range.

The first terminal may be a target terminal, or the first terminal may be a terminal used to assist the target terminal in positioning, or the first terminal receives related information or a related request used to assist the target terminal in positioning.

Optionally, in a case that a communication range of the target terminal and a communication range of the second terminal meet a second condition, the first terminal sends the first information to the target communication device.

That a communication range of the target terminal and a communication range of the second terminal meet a second condition may mean that the communication range of the target terminal and the communication range of the second terminal are the same or are different within a preset range.

The first terminal may be a target terminal, or the first terminal may be a terminal used to assist the target terminal in positioning, or the first terminal receives related information or a related request used to assist the target terminal in positioning.

Optionally, in a case that a zone ID of the first terminal and a zone ID of the second terminal meet a first condition, the first terminal sends the first information to the target communication device.

That a zone ID of the first terminal and a zone ID of the second terminal meet a first condition may mean that the zone ID of the first terminal is equal to the zone ID of the second terminal.

That a zone ID of the first terminal and a zone ID of the second terminal meet a first condition may mean that a communication range corresponding to the zone ID of the first terminal and a communication range corresponding to the zone ID of the second terminal are the same or are different within a preset range.

The first terminal may be a target terminal, or the first terminal may be a terminal used to assist the target terminal in positioning, or the first terminal receives related information or a related request used to assist the target terminal in positioning.

Optionally, in a case that a communication range of the first terminal and a communication range of the second terminal meet a second condition, the first terminal sends the first information to the target communication device.

That a communication range of the first terminal and a communication range of the second terminal meet a second condition may mean that the communication range of the first terminal and the communication range of the second terminal are the same or are different within a preset range.

The first terminal may be a target terminal, or the first terminal may be a terminal used to assist the target terminal in positioning, or the first terminal receives related information or a related request used to assist the target terminal in positioning.

Optionally, that the communication range of the first terminal and the communication range of the second terminal are different within a preset range may include that the first terminal and the second terminal are in a communication range of each other.

Optionally, that the communication range of the target terminal and the communication range of the second terminal are different within a preset range may include that the target terminal and the second terminal are in a communication range of each other.

In this embodiment of this application, the first terminal measures the physical sidelink SL positioning reference signal sent by the second terminal, and receives one or more of the line-of-sight LOS indication information, the measurement information of the SL positioning reference signal, and the location-related information that are sent by the first terminal based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

FIG. 5 is a second schematic flowchart of a positioning method according to an embodiment of this application. As shown in FIG. 5, the method includes the following step 501.

Step 501: A target communication device receives first information, where the first information is sent by a first terminal based on measurement on an SL positioning reference signal sent by a second terminal.

The first information includes at least one of the following:
line-of-sight LOS indication information;
measurement information of the SL positioning reference signal; and
location-related information; and
the target communication device is the second terminal, a preset terminal, a base station device, or a core network device.

Currently, a communication system does not support sidelink positioning. Therefore, the communication system cannot determine how to implement positioning based on a physical sidelink SL positioning reference signal in an SL scenario. In addition, it is not clear whether LOS/NLOS identification should be supported and whether an NLOS result should be fed back after the sidelink positioning is supported.

Therefore, in this embodiment of this application, the target communication device may receive the first information. The first information may be sent by the first terminal based on measurement on the SL positioning reference signal sent by the second terminal, that is, the first terminal may measure or receive the physical sidelink SL positioning reference signal sent by the second terminal, and complete the measurement. After completing the measurement on the SL positioning reference signal, the first terminal may report or feed back the first information to the target communication device based on the measurement.

The first terminal is a measurement terminal, and the second terminal is a terminal that sends the physical sidelink SL positioning reference signal.

Optionally, the target communication device may receive the first information, and obtain one or more of the line-of-sight LOS indication information, the measurement information of the SL positioning reference signal, and the location-related information, to implement positioning of a target terminal.

Optionally, the target communication device that receives the first information may be the second terminal.

Optionally, the target communication device that receives the first information may be a network side device, such as a base station device or a core network device.

Optionally, the target communication device that receives the first information may be a preset terminal that is different from the first terminal and different from the second terminal. For example, a preset terminal may be preset or set to receive the first information.

Optionally, a terminal that needs to be located may be referred to as a target terminal.

Optionally, the second terminal may be a target terminal.

Optionally, the second terminal may not be a target terminal, and the second terminal sends the to-be-measured physical sidelink SL positioning reference signal to the first terminal to assist in positioning of the target terminal.

Specifically, in this embodiment of this application, in an SL scenario, the physical sidelink SL positioning reference signal sent by the second terminal is measured, and one or more of the line-of-sight LOS indication information, the measurement information of the SL positioning reference signal, and the location-related information are sent to the target communication device based on the measurement, so that a positioning method in the SL scenario is specified. In this way, in the communication system, the positioning method in the SL scenario can be performed based on this embodiment of this application, and positioning enhancement in the SL scenario is specified, that is, reporting of LOS and NLOS indication information is supported, thereby implementing positioning enhancement in the SL scenario and effectively reducing a measurement error caused by NLOS in the SL scenario.

In this embodiment of this application, the first terminal measures the physical sidelink SL positioning reference signal sent by the second terminal, and sends one or more of the line-of-sight LOS indication information, the measurement information of the SL positioning reference signal, and the location-related information to the target communication device based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

Optionally, in a case that the target communication device is the second terminal or a preset terminal, the first information is included in at least one of the following:
a physical sidelink control channel PSCCH, a physical sidelink feedback channel PSFCH, a physical sidelink shared channel PSSCH, sidelink control information SCI, a Medium Access Control control element MAC CE, PC5 radio resource control PC5-RRC, a PC5 positioning protocol PC5-LPP, or second sidelink control information SCI.

Specifically, if the target communication device is the second terminal or a preset terminal, the first information may be carried in any one or more of the following:
a physical sidelink control channel PSCCH, a physical sidelink feedback channel PSFCH, a physical sidelink shared channel PSSCH, sidelink control information SCI, a Medium Access Control control element MAC CE, PC5 radio resource control PC5-RRC, a PC5 positioning protocol PC5-LPP, or second sidelink control information SCI.

Optionally, when the first information is carried in one or more of the foregoing items, a part of the first information may be carried in one item, and another part of the first information may be carried in another item. The plurality of items may be transmitted at the same time, or may not be transmitted at the same time.

Optionally, in a case that the target communication device is a base station device or a core network device, the first information is included in at least one of the following:
uplink control information UCI, a physical uplink control channel PUCCH, a physical uplink shared channel PUSCH, a Media Access Control control element MAC CE, radio resource control RRC, or a positioning protocol LPP.

Specifically, if the target communication device is a base station device or a core network device, the first information may be carried in any one or more of the following:
uplink control information UCI, a physical uplink control channel PUCCH, a physical uplink shared channel PUSCH, a Media Access Control control element MAC CE, radio resource control RRC, or a positioning protocol LPP.

Optionally, when the first information is carried in one or more of the foregoing items, a part of the first information may be carried in one item, and another part of the first information may be carried in another item. The plurality of items may be transmitted at the same time, or may not be transmitted at the same time.

Optionally, the measurement information of the SL positioning reference signal includes at least one of the following:
identification information and a measurement result of an SL positioning reference signal associated with the identification information, where
the identification information includes at least one of the following:
   identification information of at least one first terminal;
   identification information of at least one second terminal; and
   identification information of at least one SL positioning reference signal.

Optionally, the measurement information of the SL positioning reference signal may include any one or more of the following:
identification information; or
a measurement result of an SL positioning reference signal associated with the identification information.

Optionally, the measurement information of the SL positioning reference signal may include identification information, where
the identification information may include any one or more of the following:
identification information of at least one first terminal; or
identification information of at least one second terminal; or
identification information of at least one SL positioning reference signal.

Optionally, the measurement information of the SL positioning reference signal may include the measurement result of the SL positioning reference signal associated with the identification information, for example, may include any one or more of the following:
a measurement result of an SL positioning reference signal associated with at least one first terminal; or
a measurement result of an SL positioning reference signal associated with at least one second terminal; or
a measurement result of an SL positioning reference signal associated with at least one SL positioning reference signal.

Optionally, the measurement result includes at least one of the following:
angle information, where the angle information includes an angle of arrival measurement result and/or an angle of departure measurement result;
time information, where the time information includes at least one of a reference signal time difference measurement result, a round-trip delay measurement result, and a reference signal arrival time; and
energy information, where the energy information includes a reference signal received power RSRP and/or a received signal strength indicator RSSI.

Optionally, the measurement result may include any one or more of the following:
angle information, where the angle information includes an angle of arrival measurement result and/or an angle of departure measurement result; or
time information, where the time information includes at least one of a reference signal time difference measurement result, a round-trip delay measurement result, and a reference signal arrival time; or
energy information, where the energy information includes a reference signal received power RSRP and/or a received signal strength indicator RSSI.

For example, a measurement result associated with one SL positioning reference signal may include:
an angle of arrival measurement result and/or an angle of departure measurement result corresponding to the SL positioning reference signal;
any one or more of a reference signal time difference measurement result, a round-trip delay measurement result, and a reference signal arrival time corresponding to the SL positioning reference signal; and
a reference signal received power RSRP and/or a received signal strength indicator RSSI corresponding to the SL positioning reference signal.

Optionally, one measurement result is associated with at least one piece of LOS indication information; or one piece of identification information is associated with at least one piece of LOS indication information.

Optionally, one measurement result may be associated with at least one piece of LOS indication information, and both may be reported together. The LOS indication information is indication information of LOS-related information for the measurement result.

For example, a measurement result associated with one SL positioning reference signal may be associated with LOS indication information corresponding to the SL positioning reference signal, and the LOS indication information may indicate LOS-related information corresponding to the measurement result.

Optionally, one piece of identification information may be associated with at least one piece of LOS indication information, and both may be reported together. The indication information is indication information of LOS-related information for the identification information.

For example, one piece of identification information (for example, identification information of the second terminal) may be associated with LOS indication information corresponding to the second terminal, and the LOS indication information may indicate a measurement result associated with the identification information (which represents the second terminal), that is, LOS-related information for the identification information.

Specifically, the identification information may represent a device or a path uniquely indicated by the identification information. That identification information is associated with one piece of information may mean that a device or a path represented by the identification information is associated with the information.

Optionally, the at least one piece of LOS indication information is used to indicate one of the following:
whether the measurement result includes an LOS path;
a probability that the measurement result includes an LOS path;
whether an LOS path is included between the identification information and a target terminal;
whether an LOS path is included between the identification information and the first terminal;
a probability that an LOS path is included between the identification information and the second terminal; and
a probability that an LOS path is included between the identification information and the first terminal.

Optionally, at least one piece of LOS indication information associated with one measurement result may be used to indicate any one or more of the following:
whether the measurement result includes an LOS path; or
a probability that the measurement result includes an LOS path.

For example, a measurement result associated with one SL positioning reference signal may be associated with LOS indication information corresponding to the SL positioning reference signal, and the LOS indication information may indicate whether the measurement result includes an LOS path; or the LOS indication information may indicate a probability that the measurement result includes an LOS path.

Optionally, at least one piece of LOS indication information associated with one piece of identification information may be used to indicate any one or more of the following:
whether an LOS path is included between the identification information and a target terminal; or
whether an LOS path is included between the identification information and the first terminal; or
a probability that an LOS path is included between the identification information and the second terminal; or
a probability that an LOS path is included between the identification information and the first terminal.

For example, one piece of identification information (for example, identification information of the second terminal) may be associated with LOS indication information corresponding to the second terminal, and the LOS indication information may indicate a measurement result associated with the identification information (which represents the second terminal), that is, a measurement result about whether an LOS path is included between the identification information and the target terminal.

For example, one piece of identification information (for example, identification information of the second terminal) may be associated with LOS indication information corresponding to the second terminal, and the LOS indication information may indicate a measurement result associated with the identification information (which represents the second terminal), that is, whether an LOS path is included between the identification information and the first terminal.

For example, one piece of identification information (for example, identification information of the second terminal) may be associated with LOS indication information corresponding to the second terminal, and the LOS indication information may indicate a measurement result associated with the identification information (which represents the second terminal), that is, a probability that an LOS path is included between the identification information and the first terminal.

Optionally, the LOS indication information includes at least one of the following:
a first bit part used to indicate LOS or non-line-of-sight NLOS;
a second bit part used to indicate an LOS probability; and
a third bit part used to indicate an LOS confidence.

Optionally, a structure of the LOS indication information may include a part, for example, may include aa first bit part used to indicate LOS or non-line-of-sight NLOS, a second bit part used to indicate an LOS probability, or a third bit part used to indicate an LOS confidence.

Optionally, a structure of the LOS indication information may include two parts, for example, may include a first bit part used to indicate LOS or non-line-of-sight NLOS and a second bit part used to indicate an LOS probability, or may include a second bit part used to indicate an LOS probability and a third bit part used to indicate an LOS confidence, or may include a first bit part used to indicate LOS or non-line-of-sight NLOS and a third bit part used to indicate an LOS confidence.

Optionally, a structure of the LOS indication information may include three parts, for example, may include a first bit part used to indicate LOS or non-line-of-sight NLOS, a second bit part used to indicate an LOS probability, and a third bit part used to indicate an LOS confidence.

Optionally, the measurement result further includes a measurement result of at least one target path.

Specifically, whether positioning in a current SL scenario can support feedback of a multi-path measurement result is still unclear in a communication system. Therefore, in this embodiment of this application, the measurement result may further include the measurement result of the at least one target path, so that the measurement result of the at least one target path can be accurately reported in the current communication system.

Optionally, N paths may be measured to obtain measurement results of the N paths, where N is a positive integer greater than or equal to 1.

Optionally, the measurement result of the target path may include at least one of the following:
angle information of the target path, where the angle information includes an angle of arrival measurement result and/or an angle of departure measurement result;
time information of the target path, where the time information includes at least one of a reference signal time difference measurement result, a round-trip delay measurement result, and a reference signal arrival time; and
energy information of the target path, where the energy information includes a reference signal received power RSRP and/or a received signal strength indicator RSSI.

Optionally, the measurement result of the target path may include at least angle information of the target path.

Optionally, the measurement result of the target path may include at least angle information and time information of the path.

Optionally, the measurement result of the target path may include at least angle information, time information, and energy information of the path.

Optionally, the measurement result of the at least one target path is associated with at least one piece of LOS indication information; and one piece of LOS indication information is associated with one target path, and different LOS indication information is associated with different target paths.

Optionally, the measurement result of the at least one target path is associated with at least one piece of LOS indication information, where one piece of LOS indication information is associated with one target path, and different LOS indication information is associated with different target paths.

For example, the measurement results of the N paths are associated with at least N pieces of LOS indication information, and a measurement result of each path is associated with respective LOS indication information.

Optionally, the measurement result of the at least one target path includes any one or more of the following:
a measurement result of an LOS path in the at least one target path;
a measurement result of the first target path in the at least one target path;
a measurement result of a target path with strongest energy in the at least one target path;
measurement results of the first N target paths in the at least one target path, where N is a positive integer;
measurement results of the first M target paths with highest energy rankings in the at least one target path, where M is a positive integer;
a measurement result of a target path whose RSRP is greater than a first threshold in the at least one target path; and
measurement results of Q target paths between the first target path and the target path with strongest energy in the at least one target path, where Q is a positive integer, and Q=N-2.

Optionally, the measurement result of the at least one target path includes at least one of the following:
a measurement result of an LOS path in the at least one target path; or
a measurement result of the first target path in the at least one target path; or
a measurement result of a target path with strongest energy in the at least one target path; or
measurement results of the first N target paths in the at least one target path, where N is a positive integer; or
measurement results of the first M target paths with highest energy rankings in the at least one target path, where M is a positive integer; or
a measurement result of a target path whose RSRP is greater than a first threshold in the at least one target path; or
measurement results of Q target paths between the first target path and the target path with strongest energy in the at least one target path, where Q is a positive integer, and Q=N-2.

Optionally, the measurement result includes the measurement result of the at least one target path, which may include any one or more of the following:
only a measurement result of an LOS path;
only a measurement result of the first target path;
only a measurement result of a strongest path;
measurement results of the first N paths;
measurement results of the strongest M paths;
a measurement result of a path whose RSRP is greater than a first threshold; and
measurement results pf paths between N-2 first paths and the strongest path.

Specifically, the first threshold may be predefined in a protocol, or may be preset, or may be pre-indicated by a network side device or an upper layer.

Optionally, the target path meets at least one of the following:
an RSRP of the target path is greater than a fourth threshold;
the target path is the first path from the second terminal to the first terminal;
the target path is the first path from the second terminal to the first terminal, where an RSTD between the first path and a serving cell of the target terminal is less than a fifth threshold;
an LOS threshold of the target path is greater than a sixth threshold; and
a reflection point of the target path is less than R, where R is a positive integer.

Optionally, before the measurement, the first terminal may further first determine a target path that needs to be measured or reported.

Optionally, the measurement condition may include: an RSRP of the to-be-measured or to-be-reported target path is greater than a fourth threshold.

Optionally, the measurement condition may include: the to-be-measured or to-be-reported target path is the first path of the second terminal.

Optionally, the measurement condition may include: the to-be-measured or to-be-reported target path is the first path of the second terminal, where an RSTD between the first path and a serving cell of the target terminal is less than a fifth threshold.

Optionally, the measurement condition may include: an LOS threshold of the to-be-measured or to-be-reported target path is greater than a sixth threshold.

Optionally, the measurement condition may include: a reflection point of the to-be-measured or to-be-reported target path is less than R, where R is a positive integer, for example, a path with a maximum of one reflection point.

Optionally, the target path may meet any one or more of the following:
an RSRP of the target path is greater than a fourth threshold; or
the target path is the first path from the second terminal to the first terminal; or
the target path is the first path from the second terminal to the first terminal, where an RSTD between the first path and a serving cell of the target terminal is less than a fifth threshold; or
an LOS threshold of the target path is greater than a sixth threshold; or
a reflection point of the target path is less than R, where R is a positive integer.

Specifically, the fourth threshold may be predefined in a protocol, or may be preset, or may be pre-indicated by a network side device or an upper layer.

Specifically, the fifth threshold may be predefined in a protocol, or may be preset, or may be pre-indicated by a network side device or an upper layer.

Specifically, the sixth threshold may be predefined in a protocol, or may be preset, or may be pre-indicated by a network side device or an upper layer.

Optionally, the method further includes:
before the receiving first information, receiving, by the target communication device, first capability information sent by the first terminal, where the first capability information is used to indicate at least one of the following:
whether reporting of LOS identification information is supported;
whether measurement on per path is supported;
whether measurement on the first path is supported;
whether measurement on an additional path is supported;
the number of supported target paths; and
the number of supported second terminals.

Optionally, before receiving the first information, the target communication device receives first capability information sent by the first terminal, where the first capability information is reported by the first terminal before the first terminal measures the SL positioning reference signal sent by the second terminal.

Specifically, the first capability information is used to indicate at least one of the following:
whether the first terminal supports reporting of LOS identification information; or
whether the first terminal supports measurement on per path; or
the number of target paths supported by the first terminal; or
the number of second terminals supported by the first terminal.

Optionally, in a case that the LOS indication information associated with the measurement information of the SL positioning reference signal indicates NLOS, the first information further includes reflection point information, and the reflection point information includes at least one of the following:
location information of a reflection point;
reflection angle information of a reflection point; and
incident angle information of a reflection point.

Optionally, if the measurement result includes an NLOS result, it indicates that a non-line-of-sight path exists. Therefore, the first information may further include reflection point information.

Specifically, the reflection point information includes any one or more of the following:
location information of a reflection point; or
reflection angle information of a reflection point; or
incident angle information of a reflection point.

Optionally, the NLOS result may be accompanied by reporting of one or more pieces of reflection point location information.

Optionally, the NLOS result may be accompanied by reporting of one or more pieces of reflection angle information.

Optionally, the NLOS result may be accompanied by reporting of one or more pieces of incident angle information.

Optionally, the reflection point information is associated with first identification information corresponding to the SL positioning reference signal, where
the first identification information corresponding to the SL positioning reference signal includes at least one of the following:
identification information of at least one first terminal corresponding to the SL positioning reference signal;
identification information of at least one second terminal corresponding to the SL positioning reference signal;
at least one piece of panel identification information corresponding to the SL positioning reference signal; and
identification information of at least one SL positioning reference signal corresponding to the SL positioning reference signal.

Optionally, reflection point information may be associated with first identification information corresponding to an SL positioning reference signal corresponding to an NLOS path of the reflection point.

Optionally, the first identification information corresponding to the SL positioning reference signal may include any one or more of the following:
identification information of at least one first terminal corresponding to the SL positioning reference signal; or
identification information of at least one second terminal corresponding to the SL positioning reference signal; or
at least one piece of panel identification information corresponding to the SL positioning reference signal; or
identification information of at least one SL positioning reference signal corresponding to the SL positioning reference signal.

Optionally, the measurement information of the SL positioning reference signal further includes at least one of the following:
second identification information and a measurement result of an SL positioning reference signal associated with the second identification information, where
the second identification information includes at least one of the following:
   at least one piece of panel identification information;
   at least one piece of panel location information;
   at least one piece of panel angle information; and
   at least one piece of group ID information.

Optionally, in an SL scenario, there is a vehicle-to-vehicle scenario. Because a vehicle body has a specified length, measurement results corresponding to front and rear panels of the vehicle body of the same vehicle may be different. Therefore, when the measurement results are being determined, a measurement result of a specific panel may be accurately obtained.

Therefore, the measurement information of the SL positioning reference signal may further include any one or more of the following:
second identification information; or
a measurement result of an SL positioning reference signal associated with the second identification information, where
the second identification information includes any one or more of the following:
   at least one piece of panel identification information;
   at least one piece of panel location information;
   at least one piece of panel angle information; and
   at least one piece of group ID information.

Optionally, the measurement result of the SL positioning reference signal associated with the second identification information includes at least one of the following:
a measurement result of an SL positioning reference signal associated with the panel identification information or the panel location information;
a measurement result of an SL positioning reference signal associated with multiple panels;
a measurement result of an SL positioning reference signal associated with a group ID;
first indication information, where the indication information is used to indicate that the measurement result of the SL positioning reference signal is for a single panel; and
second indication information, where the indication information is used to indicate that the measurement result of the SL positioning reference signal is for multiple panels.

Optionally, the measurement result of the SL positioning reference signal associated with the second identification information may include any one or more of the following:
a measurement result of an SL positioning reference signal associated with the panel identification information or the panel location information; or
a measurement result of an SL positioning reference signal associated with multiple panels; or
a measurement result of an SL positioning reference signal associated with a group ID; or
first indication information, where the indication information is used to indicate that the measurement result of the SL positioning reference signal is for a single panel; or
second indication information, where the indication information is used to indicate that the measurement result of the SL positioning reference signal is for multiple panels.

Specifically, the measurement result may include a measurement result of a specific panel, a multi-panel measurement result, or a single-panel measurement result, to obtain a more accurate measurement result, so that a positioning result can be more accurate when a communication device completes positioning of the target terminal.

Optionally, the location-related information includes at least one of the following:
identification information and location-related information associated with the identification information, where
the identification information includes at least one of the following:
   identification information of at least one first terminal;
   identification information of at least one second terminal;
   at least one piece of panel identification information;
   at least one piece of group ID information; and
   identification information of at least one SL positioning reference signal; and
   the location-related information includes at least one of the following:
      absolute location information; and
      relative location information.

Optionally, the location-related information in the first information may include any one or more of the following:
identification information; and
location-related information associated with the identification information.

Specifically, the identification information may include any one or more of the following:
identification information of at least one first terminal; or
identification information of at least one second terminal; or
at least one piece of panel identification information; or
at least one piece of group ID information; or
identification information of at least one SL positioning reference signal.

For example, the location-related information in the first information may include identification information of one second terminal and location information of the second terminal.

Specifically, the location information may include absolute location information and/or relative location information.

For example, the location-related information in the first information may include identification information of one first terminal and location information of the first terminal.

Specifically, the identification information is used to represent a device or a path uniquely indicated by the identification information.

Optionally, the location-related information is carried in 2nd SCI.

Optionally, the location-related information may be carried in 2nd SCI.

Optionally, the location-related information is carried in a communication range.

Optionally, in a case that the location-related information is carried in 2nd SCI, the location-related information may be carried in a communication range.

Optionally, the method further includes:
receiving second information, where the second information includes at least one of the following:
the identification information associated with the measurement result;
the location information associated with the identification information associated with the measurement result; and
location information of the target terminal, where the target terminal is a terminal whose location needs to be determined.

Optionally, the first terminal may further receive information sent by another terminal. The information sent by the another terminal is similar to the first information, that is, the another terminal measures corresponding SL positioning reference information and sends the information to the first terminal, where the target terminal is a terminal whose location needs to be determined in this measurement. In this case, the first terminal may receive and forward related information (that is, the second information) to the target communication device.

Optionally, the first terminal may further send second information to the target communication device, where the second information includes at least one of the following:
the identification information associated with the measurement result;
the location information associated with the identification information associated with the measurement result; and
location information of the target terminal, where the target terminal is a terminal whose location needs to be determined.

Optionally, the method further includes:
before the receiving first information, sending third information to the first terminal, where the third information includes at least one of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

Optionally, before receiving the first information, the target communication device may send third information to the first terminal, where the third information is received before the first terminal measures the SL positioning reference signal sent by the second terminal.

Specifically, the third information may include any one or more of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

Optionally, the LOS indication information may be used to indicate whether a terminal or a base station measured by the first terminal has an LOS path.

Optionally, the LOS indication information may be used to indicate a probability that a terminal or a base station measured by the first terminal includes an LOS path.

Optionally, the LOS indication information may be used to indicate whether an SL-PRS measured by the first terminal has an LOS path.

Optionally, the LOS indication information may be used to indicate a probability that an SL-PRS measured by the first terminal includes an LOS path.

In this embodiment of this application, the first terminal measures the physical sidelink SL positioning reference signal sent by the second terminal, and receives one or more of the line-of-sight LOS indication information, the measurement information of the SL positioning reference signal, and the location-related information that are sent by the first terminal based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

The positioning method provided in the embodiments of this application may be performed by a positioning apparatus. In the embodiments of this application, an example in which the positioning apparatus performs the positioning method is used to describe the positioning apparatus provided in the embodiments of this application.

FIG. 6 is a first schematic structural diagram of a positioning apparatus according to an embodiment of this application. As shown in FIG. 6, the apparatus 600 includes a measurement module 601 and a first sending module 602.

The measurement module 601 is configured to measure a physical sidelink SL positioning reference signal sent by a second terminal.

The first sending module 602 is configured to send first information to a target communication device based on measurement on the SL positioning reference signal.

The first information includes at least one of the following:
line-of-sight LOS indication information;
measurement information of the SL positioning reference signal; and
location-related information; and
the target communication device is the second terminal, a preset terminal, a base station device, or a core network device.

Optionally, the positioning apparatus may measure, by using the measurement module 601, the physical sidelink SL positioning reference signal sent by the second terminal; and send the first information to the target communication device by using the first sending module 602 based on measurement on the SL positioning reference signal.

In this embodiment of this application, the physical sidelink SL positioning reference signal sent by the second terminal is measured, and one or more of the line-of-sight LOS indication information, the measurement information of the SL positioning reference signal, and the location-related information are sent to the target communication device based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

Optionally, in a case that the target communication device is the second terminal or a preset terminal, the first information is included in at least one of the following:
a physical sidelink control channel PSCCH, a physical sidelink feedback channel PSFCH, a physical sidelink shared channel PSSCH, sidelink control information SCI, a Medium Access Control control element MAC CE, PC5 radio resource control PC5-RRC, a PC5 positioning protocol PC5-LPP, or second sidelink control information SCI.

Optionally, in a case that the target communication device is a base station device or a core network device, the first information is included in at least one of the following:
uplink control information UCI, a physical uplink control channel PUCCH, a physical uplink shared channel PUSCH, a Media Access Control control element MAC CE, radio resource control RRC, or a positioning protocol LPP.

Optionally, the measurement information of the SL positioning reference signal includes at least one of the following:
identification information and a measurement result of an SL positioning reference signal associated with the identification information, where
the identification information includes at least one of the following:
   identification information of at least one first terminal;
   identification information of at least one second terminal; and
   identification information of at least one SL positioning reference signal.

Optionally, the measurement result includes at least one of the following:
angle information, where the angle information includes an angle of arrival measurement result and/or an angle of departure measurement result;
time information, where the time information includes at least one of a reference signal time difference measurement result, a round-trip delay measurement result, and a reference signal arrival time; and
energy information, where the energy information includes a reference signal received power RSRP and/or a received signal strength indicator RSSI.

Optionally, one measurement result is associated with at least one piece of LOS indication information; or one piece of identification information is associated with at least one piece of LOS indication information.

Optionally, the at least one piece of LOS indication information is used to indicate one of the following:
whether the measurement result includes an LOS path;
a probability that the measurement result includes an LOS path;
whether an LOS path is included between the identification information and a target terminal;
whether an LOS path is included between the identification information and the first terminal;
a probability that an LOS path is included between the identification information and the second terminal; and
a probability that an LOS path is included between the identification information and the first terminal.

Optionally, the LOS indication information includes at least one of the following:
a first bit part used to indicate LOS or non-line-of-sight NLOS;
a second bit part used to indicate an LOS probability; and
a third bit part used to indicate an LOS confidence.

Optionally, the measurement result further includes a measurement result of at least one target path.

Optionally, the measurement result of the at least one target path is associated with at least one piece of LOS indication information; and one piece of LOS indication information is associated with one target path, and different LOS indication information is associated with different target paths.

Optionally, the measurement result of the at least one target path includes any one or more of the following:
a measurement result of an LOS path in the at least one target path;
a measurement result of the first target path in the at least one target path;
a measurement result of a target path with strongest energy in the at least one target path;
measurement results of the first N target paths in the at least one target path, where N is a positive integer;
measurement results of the first M target paths with highest energy rankings in the at least one target path, where M is a positive integer;
a measurement result of a target path whose RSRP is greater than a first threshold in the at least one target path; and
measurement results of Q target paths between the first target path and the target path with strongest energy in the at least one target path, where Q is a positive integer, and Q=N-2.

Optionally, the target path meets at least one of the following:
an RSRP of the target path is greater than a fourth threshold;
the target path is the first path from the second terminal to the first terminal;
the target path is the first path from the second terminal to the first terminal, where an RSTD between the first path and a serving cell of the target terminal is less than a fifth threshold;
an LOS threshold of the target path is greater than a sixth threshold; and
a reflection point of the target path is less than R, where R is a positive integer.

Optionally, the apparatus further includes:
a second sending module, configured to: before the first terminal measures the SL positioning reference signal sent by the second terminal, send first capability information to the target communication device, where the first capability information is used to indicate at least one of the following:
whether reporting of LOS identification information is supported;
whether measurement on per path is supported;
whether measurement on the first path is supported;
whether measurement on an additional path is supported;
the number of supported target paths; and
the number of supported second terminals.

Optionally, in a case that the LOS indication information associated with the measurement information of the SL positioning reference signal indicates NLOS, the first information further includes reflection point information, and the reflection point information includes at least one of the following:
location information of a reflection point;
reflection angle information of a reflection point; and
incident angle information of a reflection point.

Optionally, the reflection point information is associated with first identification information corresponding to the SL positioning reference signal, where
the first identification information corresponding to the SL positioning reference signal includes at least one of the following:
identification information of at least one first terminal corresponding to the SL positioning reference signal;
identification information of at least one second terminal corresponding to the SL positioning reference signal;
at least one piece of panel identification information corresponding to the SL positioning reference signal; and
identification information of at least one SL positioning reference signal corresponding to the SL positioning reference signal.

Optionally, the measurement information of the SL positioning reference signal further includes at least one of the following:
second identification information and a measurement result of an SL positioning reference signal associated with the second identification information, where
the second identification information includes at least one of the following:
   at least one piece of panel identification information;
   at least one piece of panel location information;
   at least one piece of panel angle information; and
   at least one piece of group ID information.

Optionally, the measurement result of the SL positioning reference signal associated with the second identification information includes at least one of the following:
a measurement result of an SL positioning reference signal associated with the panel identification information or the panel location information;
a measurement result of an SL positioning reference signal associated with multiple panels;
a measurement result of an SL positioning reference signal associated with a group ID;
first indication information, where the indication information is used to indicate that the measurement result of the SL positioning reference signal is for a single panel; and
second indication information, where the indication information is used to indicate that the measurement result of the SL positioning reference signal is for multiple panels.

Optionally, the location-related information includes at least one of the following:
identification information and location-related information associated with the identification information, where
the identification information includes at least one of the following:
   identification information of at least one first terminal;
   identification information of at least one second terminal;
   at least one piece of panel identification information;
   at least one piece of group ID information; and
   identification information of at least one SL positioning reference signal; and
   the location-related information includes at least one of the following:
      absolute location information; and
      relative location information.

Optionally, the location-related information is carried in 2nd SCI.

Optionally, the location-related information is carried in a communication range.

Optionally, the apparatus further includes:
a third sending module, configured to send second information to the target communication device, where the second information includes at least one of the following:
the identification information associated with the measurement result;
the location-related information associated with the identification information associated with the measurement result; and
location information of the target terminal, where the target terminal is a terminal whose location needs to be determined.

Optionally, the apparatus further includes:
a first receiving module, configured to: before the first terminal measures the SL positioning reference signal sent by the second terminal, receive third information sent by the target communication device, where the third information includes at least one of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

Optionally, the apparatus further includes:
a determining module, configured to: before the first terminal measures the SL positioning reference signal sent by the second terminal, determine the second terminal, where
the second terminal meets at least one of the following:
   an Rx time difference between an SL-PRS between the second terminal and the first terminal and a serving cell of the first terminal is within a first threshold;
   an Rx time difference between the second terminal and the serving cell of the first terminal is within a second threshold;
   a synchronization time difference between the second terminal and the first terminal is within a third threshold;
   the second terminal and the first terminal belong to a same synchronization clock;
   a measurement result RSRP of the second terminal is greater than a second threshold; and
   a measurement result RSTD of the second terminal and the serving cell is less than a third threshold.

Optionally, the first sending module is specifically configured to:
send, only in a case that an RSRP of the measured SL positioning reference signal is greater than or equal to a threshold N, the first information associated with the SL positioning reference signal; or
send the first information only in a case that RSRPs of all measured SL positioning reference signals are greater than or equal to the threshold.

Optionally, the apparatus further includes:
a fourth sending module, configured to send third information to the target communication device in a case that the RSRPs of all the measured SL positioning reference signals are less than the threshold N, where
the third information includes at least one of the following:
   measurement failure indication information;
   information indicating that measured energy is less than a threshold; and
   NACK indication information.

Optionally, the first sending module is specifically configured to:
in a case that a zone ID of the target terminal and a zone ID of the second terminal meet a first condition, send, by the first terminal, the first information to the target communication device; or
in a case that a communication range of the target terminal and a communication range of the second terminal meet a second condition, send, by the first terminal, the first information to the target communication device; or
in a case that a zone ID of the first terminal and a zone ID of the second terminal meet a first condition, send, by the first terminal, the first information to the target communication device; or
in a case that a communication range of the first terminal and a communication range of the second terminal meet a second condition, send, by the first terminal, the first information to the target communication device.

In this embodiment of this application, the physical sidelink SL positioning reference signal sent by the second terminal is measured, and one or more of the line-of-sight LOS indication information, the measurement information of the SL positioning reference signal, and the location-related information are sent to the target communication device based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

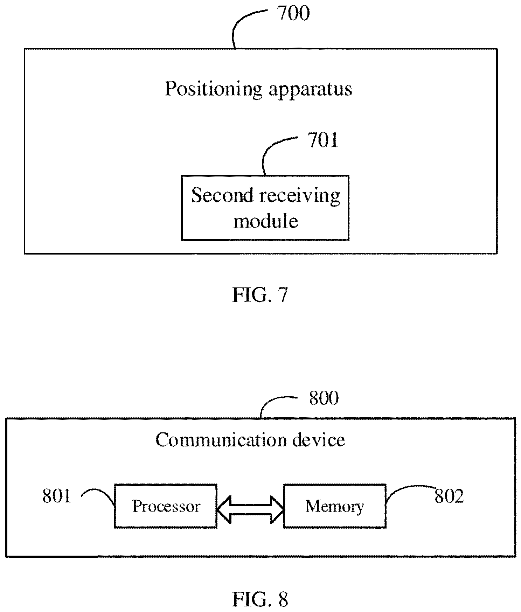

FIG. 7 is a second schematic structural diagram of a positioning apparatus according to an embodiment of this application. As shown in FIG. 7, the apparatus 700 includes a second receiving module 701.

The second receiving module 701 is configured to receive first information, where the first information is sent by a first terminal based on measurement on an SL positioning reference signal sent by a second terminal.

The first information includes at least one of the following:
line-of-sight LOS indication information;
measurement information of the SL positioning reference signal; and
location-related information; and
the target communication device is the second terminal, a preset terminal, a base station device, or a core network device.

Optionally, the positioning apparatus may receive the first information by using the second receiving module 701, where the first information is sent by the first terminal based on measurement on the SL positioning reference signal sent by the second terminal.

In this embodiment of this application, the first terminal measures the physical sidelink SL positioning reference signal sent by the second terminal, and receives one or more of the line-of-sight LOS indication information, the measurement information of the SL positioning reference signal, and the location-related information that are sent by the first terminal based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

Optionally, the apparatus further includes:
a third receiving module, configured to: before the first information is received, receive first capability information sent by the first terminal, where the first capability information is used to indicate at least one of the following:
whether reporting of LOS identification information is supported;
whether measurement on per path is supported;
whether measurement on the first path is supported;
whether measurement on an additional path is supported;
the number of supported target paths; and
the number of supported second terminals.

Optionally, the apparatus further includes:
a fifth sending module, configured to: before the first information is received, send third information to the first terminal, where the third information includes at least one of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

In this embodiment of this application, the first terminal measures the physical sidelink SL positioning reference signal sent by the second terminal, and receives one or more of the line-of-sight LOS indication information, the measurement information of the SL positioning reference signal, and the location-related information that are sent by the first terminal based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

The positioning apparatus in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11. The another device may be a server, a network attached storage (Network Attached Storage, NAS), or the like. This is not specifically limited in this embodiment of this application.

The positioning apparatus provided in this embodiment of this application can implement the processes implemented in the method embodiments of FIG. 4 to FIG. 5, and achieve a same technical effect. To avoid repetition, details are not described herein again.

Optionally, FIG. 8 is a schematic structural diagram of a communication device according to an embodiment of this application. As shown in FIG. 8, an embodiment of this application further provides a communication device 800, including a processor 801 and a memory 802, where the memory 802 stores a program or an instruction that can be run on the processor 801. For example, when the communication device 800 is a terminal, the program or the instruction is executed by the processor 801 to implement the steps of the foregoing positioning method embodiment, and a same technical effect can be achieved. When the communication device 800 is a network side device, the program or the instruction is executed by the processor 801 to implement the steps of the foregoing positioning method embodiment, and a same technical effect can be achieved. To avoid repetition, details are not described herein again.

An embodiment of this application further provides a first terminal, including a processor and a communication interface. The processor is configured to:
measure a physical sidelink SL positioning reference signal sent by a second terminal; and
the communication interface is configured to:
   send first information to a target communication device based on measurement on the SL positioning reference signal, where
   the first information includes at least one of the following:
      line-of-sight LOS indication information;
      measurement information of the SL positioning reference signal; and
      location-related information; and
      the target communication device is the second terminal, a preset terminal, a base station device, or a core network device.

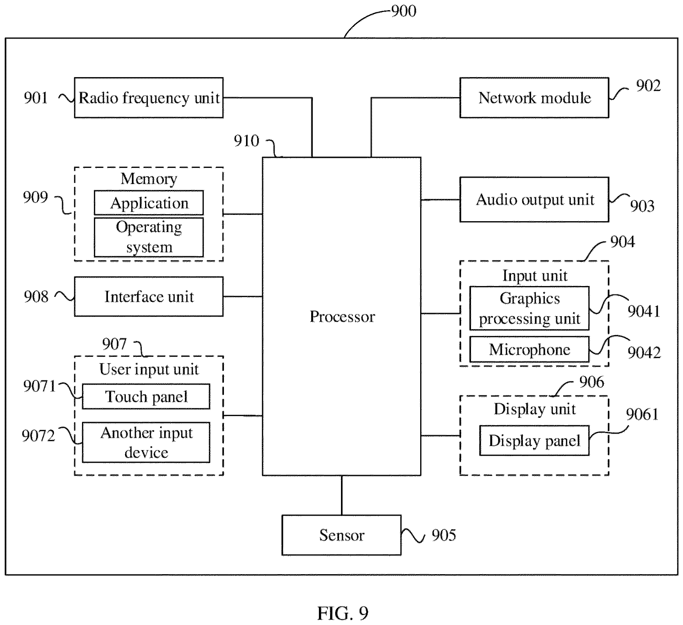

The first terminal embodiment corresponds to the foregoing method embodiment on the first terminal side. Each implementation process and implementation of the foregoing method embodiment may be applicable to the first terminal embodiment, and a same technical effect can be achieved. Specifically, FIG. 9 is a schematic structural diagram of hardware of a first terminal according to an embodiment of this application.

The first terminal 900 includes but is not limited to at least some components of a radio frequency unit 901, a network module 902, an audio output unit 903, an input unit 904, a sensor 905, a display unit 906, a user input unit 907, an interface unit 908, a memory 909, a processor 910, and the like.

A person skilled in the art can understand that the terminal 900 may further include the power supply (for example, a battery) that supplies power to each component. The power supply may be logically connected to the processor 910 by using a power supply management system, so as to manage functions such as charging, discharging, and power consumption by using the power supply management system. The terminal structure shown in FIG. 9 constitutes no limitation on the terminal, and the terminal may include more or fewer components than those shown in the figure, or combine some components, or have different component arrangements. Details are not described herein.

It should be understood that, in this embodiment of this application, the input unit 904 may include a graphics processing unit (Graphics Processing Unit, GPU) 9041 and a microphone 9042, and the graphics processing unit 9041 processes image data of a still image or a video that is obtained by an image capturing apparatus (for example, a camera) in a video capturing mode or an image capturing mode. The display unit 906 may include a display panel 9061. The display panel 9061 may be configured in a form such as a liquid crystal display or an organic light-emitting diode. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 901 may transmit the downlink data to the processor 910 for processing. In addition, the radio frequency unit 901 may send uplink data to the network side device. Usually, the radio frequency unit 901 includes but is not limited to an antenna, an amplifier, a transceiver, a coupler, a low noise amplifier, a duplexer, and the like.

The memory 909 may be configured to store a software program or an instruction and various data. The memory 909 may mainly include a first storage area for storing a program or an instruction and a second storage area for storing data. The first storage area may store an operating system, and an application or an instruction required by at least one function (for example, a sound playing function or an image playing function). In addition, the memory 909 may be a volatile memory or a non-volatile memory, or the memory 909 may include a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 909 in this embodiment of this application includes but is not limited to these memories and a memory of any other proper type.

The processor 910 may include one or more processing units. Optionally, an application processor and a modem processor are integrated into the processor 910. The application processor mainly processes an operating system, a user interface, an application, and the like. The modem processor mainly processes a wireless communication signal, for example, a baseband processor. It can be understood that, alternatively, the modem processor may not be integrated into the processor 910.

The processor 910 is configured to:
measure a physical sidelink SL positioning reference signal sent by a second terminal; and
send, by the first terminal, first information to a target communication device based on measurement on the SL positioning reference signal, where
the first information includes at least one of the following:
   line-of-sight LOS indication information;
   measurement information of the SL positioning reference signal; and
   location-related information; and
   the target communication device is the second terminal, a preset terminal, a base station device, or a core network device.

In this embodiment of this application, the physical sidelink SL positioning reference signal sent by the second terminal is measured, and one or more of the line-of-sight LOS indication information, the measurement information of the SL positioning reference signal, and the location-related information are sent to the target communication device based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

Optionally, in a case that the target communication device is the second terminal or a preset terminal, the first information is included in at least one of the following:
a physical sidelink control channel PSCCH, a physical sidelink feedback channel PSFCH, a physical sidelink shared channel PSSCH, sidelink control information SCI, a Medium Access Control control element MAC CE, PC5 radio resource control PC5-RRC, a PC5 positioning protocol PC5-LPP, or second sidelink control information SCI.

Optionally, in a case that the target communication device is a base station device or a core network device, the first information is included in at least one of the following:
uplink control information UCI, a physical uplink control channel PUCCH, a physical uplink shared channel PUSCH, a Media Access Control control element MAC CE, radio resource control RRC, or a positioning protocol LPP.

Optionally, the measurement information of the SL positioning reference signal includes at least one of the following:
identification information and a measurement result of an SL positioning reference signal associated with the identification information, where
the identification information includes at least one of the following:
   identification information of at least one first terminal;
   identification information of at least one second terminal; and
   identification information of at least one SL positioning reference signal.

Optionally, the measurement result includes at least one of the following:
angle information, where the angle information includes an angle of arrival measurement result and/or an angle of departure measurement result;
time information, where the time information includes at least one of a reference signal time difference measurement result, a round-trip delay measurement result, and a reference signal arrival time; and
energy information, where the energy information includes a reference signal received power RSRP and/or a received signal strength indicator RSSI.

Optionally, one measurement result is associated with at least one piece of LOS indication information; or one piece of identification information is associated with at least one piece of LOS indication information.

Optionally, the at least one piece of LOS indication information is used to indicate one of the following:
whether the measurement result includes an LOS path;
a probability that the measurement result includes an LOS path;
whether an LOS path is included between the identification information and a target terminal;
whether an LOS path is included between the identification information and the first terminal;
a probability that an LOS path is included between the identification information and the second terminal; and
a probability that an LOS path is included between the identification information and the first terminal.

Optionally, the LOS indication information includes at least one of the following:
a first bit part used to indicate LOS or non-line-of-sight NLOS;
a second bit part used to indicate an LOS probability; and
a third bit part used to indicate an LOS confidence.

Optionally, the measurement result further includes a measurement result of at least one target path.

Optionally, the measurement result of the at least one target path is associated with at least one piece of LOS indication information; and one piece of LOS indication information is associated with one target path, and different LOS indication information is associated with different target paths.

Optionally, the measurement result of the at least one target path includes any one or more of the following:
a measurement result of an LOS path in the at least one target path;
a measurement result of the first target path in the at least one target path;
a measurement result of a target path with strongest energy in the at least one target path;
measurement results of the first N target paths in the at least one target path, where N is a positive integer;
measurement results of the first M target paths with highest energy rankings in the at least one target path, where M is a positive integer;
a measurement result of a target path whose RSRP is greater than a first threshold in the at least one target path; and
measurement results of Q target paths between the first target path and the target path with strongest energy in the at least one target path, where Q is a positive integer, and Q=N-2.

Optionally, the target path meets at least one of the following:
an RSRP of the target path is greater than a fourth threshold;
the target path is the first path from the second terminal to the first terminal;
the target path is the first path from the second terminal to the first terminal, where an RSTD between the first path and a serving cell of the target terminal is less than a fifth threshold;
an LOS threshold of the target path is greater than a sixth threshold; and
a reflection point of the target path is less than R, where R is a positive integer.

Optionally, the processor 910 is further configured to:
before the first terminal measures the SL positioning reference signal sent by the second terminal, send, by the first terminal, first capability information to the target communication device, where the first capability information is used to indicate at least one of the following:
whether reporting of LOS identification information is supported;
whether measurement on per path is supported;
whether measurement on the first path is supported;
whether measurement on an additional path is supported;
the number of supported target paths; and
the number of supported second terminals.

Optionally, in a case that the LOS indication information associated with the measurement information of the SL positioning reference signal indicates NLOS, the first information further includes reflection point information, and the reflection point information includes at least one of the following:
location information of a reflection point;
reflection angle information of a reflection point; and
incident angle information of a reflection point.

Optionally, the reflection point information is associated with first identification information corresponding to the SL positioning reference signal, where
the first identification information corresponding to the SL positioning reference signal includes at least one of the following:
identification information of at least one first terminal corresponding to the SL positioning reference signal;
identification information of at least one second terminal corresponding to the SL positioning reference signal;
at least one piece of panel identification information corresponding to the SL positioning reference signal; and
identification information of at least one SL positioning reference signal corresponding to the SL positioning reference signal.

Optionally, the measurement information of the SL positioning reference signal further includes at least one of the following:
second identification information and a measurement result of an SL positioning reference signal associated with the second identification information, where
the second identification information includes at least one of the following:
   at least one piece of panel identification information;
   at least one piece of panel location information;
   at least one piece of panel angle information; and
   at least one piece of group ID information.

Optionally, the measurement result of the SL positioning reference signal associated with the second identification information includes at least one of the following:
a measurement result of an SL positioning reference signal associated with the panel identification information or the panel location information;
a measurement result of an SL positioning reference signal associated with multiple panels;
a measurement result of an SL positioning reference signal associated with a group ID;
first indication information, where the indication information is used to indicate that the measurement result of the SL positioning reference signal is for a single panel; and
second indication information, where the indication information is used to indicate that the measurement result of the SL positioning reference signal is for multiple panels.

Optionally, the location-related information includes at least one of the following:
identification information and location-related information associated with the identification information, where
the identification information includes at least one of the following:
   identification information of at least one first terminal;
   identification information of at least one second terminal;
   at least one piece of panel identification information;
   at least one piece of group ID information; and
   identification information of at least one SL positioning reference signal; and
   the location-related information includes at least one of the following:
      absolute location information; and
   relative location information.

Optionally, the location-related information is carried in 2nd SCI.

Optionally, the location-related information is carried in a communication range.

Optionally, the processor 910 is further configured to:
send second information to the target communication device, where the second information includes at least one of the following:
the identification information associated with the measurement result;
the location-related information associated with the identification information associated with the measurement result; and
location information of the target terminal, where the target terminal is a terminal whose location needs to be determined.

Optionally, the processor 910 is further configured to:
before the first terminal measures the SL positioning reference signal sent by the second terminal, receive, by the first terminal, third information sent by the target communication device, where the third information includes at least one of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

Optionally, the processor 910 is further configured to:
before the first terminal measures the SL positioning reference signal sent by the second terminal, determine the second terminal, where
the second terminal meets at least one of the following:
   an Rx time difference between an SL-PRS between the second terminal and the first terminal and a serving cell of the first terminal is within a first threshold;
   an Rx time difference between the second terminal and the serving cell of the first terminal is within a second threshold;
   a synchronization time difference between the second terminal and the first terminal is within a third threshold;
   the second terminal and the first terminal belong to a same synchronization clock;
   a measurement result RSRP of the second terminal is greater than a second threshold; and
   a measurement result RSTD of the second terminal and the serving cell is less than a third threshold.

Optionally, the processor 910 is further configured to:
send, only in a case that an RSRP of the measured SL positioning reference signal is greater than or equal to a threshold N, the first information associated with the SL positioning reference signal; or
send the first information only in a case that RSRPs of all measured SL positioning reference signals are greater than or equal to the threshold.

Optionally, the processor 910 is further configured to:
send third information to the target communication device in a case that the RSRPs of all the measured SL positioning reference signals are less than the threshold N, where
the third information includes at least one of the following:
   measurement failure indication information;
   information indicating that measured energy is less than a threshold; and
   NACK indication information.

Optionally, the processor 910 is further configured to perform at least one of the following:
in a case that a zone ID of the target terminal and a zone ID of the second terminal meet a first condition, send, by the first terminal, the first information to the target communication device;
in a case that a communication range of the target terminal and a communication range of the second terminal meet a second condition, send, by the first terminal, the first information to the target communication device;
in a case that a zone ID of the first terminal and a zone ID of the second terminal meet a first condition, send, by the first terminal, the first information to the target communication device; or
in a case that a communication range of the first terminal and a communication range of the second terminal meet a second condition, send, by the first terminal, the first information to the target communication device.

In this embodiment of this application, the physical sidelink SL positioning reference signal sent by the second terminal is measured, and one or more of the line-of-sight LOS indication information, the measurement information of the SL positioning reference signal, and the location-related information are sent to the target communication device based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

An embodiment of this application further provides a target communication device, including a processor and a communication interface, where the communication interface is configured to:
receive first information, where the first information is sent by a first terminal based on measurement on an SL positioning reference signal sent by a second terminal, where
the first information includes at least one of the following:
   line-of-sight LOS indication information;
   measurement information of the SL positioning reference signal; and
   location-related information; and
   the target communication device is the second terminal, a preset terminal, a base station device, or a core network device. The target communication device embodiment corresponds to the foregoing target communication method embodiment. Each implementation process and implementation of the foregoing method embodiment may be applicable to the target communication device embodiment, and a same technical effect can be achieved.

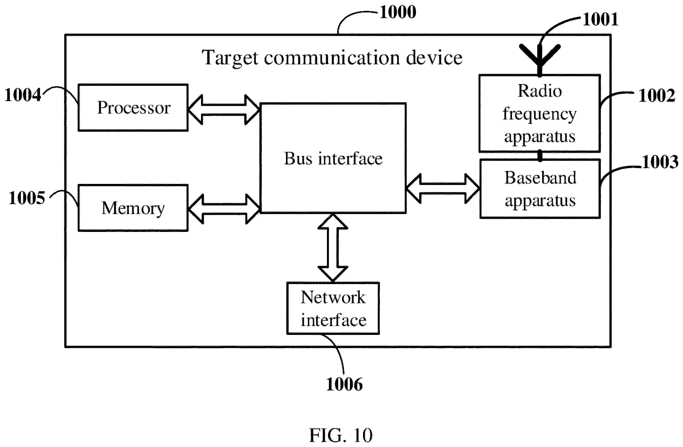

Specifically, an embodiment of this application further provides a target communication device. FIG. 10 is a schematic structural diagram of a target communication device according to an embodiment of this application. As shown in FIG. 10, the target communication device 1000 includes an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001, and sends the received information to the baseband apparatus 1003 for processing. In a downlink direction, the baseband apparatus 1003 processes to-be-sent information, and sends processed information to the radio frequency apparatus 1002. The radio frequency apparatus 1002 processes the received information, and then sends processed information through the antenna 1001.

The method performed by the target communication device in the foregoing embodiment may be implemented in the baseband apparatus 1003, and the baseband apparatus 1003 includes a baseband processor.

For example, the baseband apparatus 1003 may include at least one baseband board. A plurality of chips are disposed on the baseband board. As shown in FIG. 10, one chip is, for example, a baseband processor, and is connected to the memory 1005 by using a bus interface, to invoke a program in the memory 1005 to perform the operations of the target communication device shown in the foregoing method embodiment.

The target communication device may further include a network interface 1006, and the interface is, for example, a common public radio interface (common public radio interface, CPRI).

Specifically, the target communication device 1000 in this embodiment of the present invention further includes an instruction or a program that is stored in the memory 1005 and can be run on the processor 1004. The processor 1004 invokes the instruction or the program in the memory 1005 to perform the method performed by the modules shown in FIG. 7, and a same technical effect is achieved. To avoid repetition, details are not described herein again.

The processor 1004 is configured to:
receive first information, where the first information is sent by a first terminal based on measurement on an SL positioning reference signal sent by a second terminal, where
the first information includes at least one of the following:
   line-of-sight LOS indication information;
   measurement information of the SL positioning reference signal; and
   location-related information; and
   the target communication device is the second terminal, a preset terminal, a base station device, or a core network device.

In this embodiment of this application, the first terminal measures the physical sidelink SL positioning reference signal sent by the second terminal, and receives one or more of the line-of-sight LOS indication information, the measurement information of the SL positioning reference signal, and the location-related information that are sent by the first terminal based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

Optionally, the processor 1004 is further configured to:
before the first information is received, receive, by the target communication device, first capability information sent by the first terminal, where the first capability information is used to indicate at least one of the following:
whether reporting of LOS identification information is supported;
whether measurement on per path is supported;
whether measurement on the first path is supported;
whether measurement on an additional path is supported;
the number of supported target paths; and
the number of supported second terminals.

Optionally, the processor 1004 is further configured to:
before the first information is received, send third information to the first terminal, where the third information includes at least one of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

In this embodiment of this application, the first terminal measures the physical sidelink SL positioning reference signal sent by the second terminal, and receives one or more of the line-of-sight LOS indication information, the measurement information of the SL positioning reference signal, and the location-related information that are sent by the first terminal based on the measurement, so that a manner of performing terminal positioning based on a physical sidelink positioning reference signal is specified, thereby effectively reducing a measurement error and effectively improving positioning accuracy. In addition, reporting of LOS and NLOS indication information is considered, thereby implementing positioning enhancement in an SL scenario and effectively reducing a measurement error caused by NLOS in the SL scenario.

An embodiment of this application further provides a readable storage medium. The readable storage medium stores a program or an instruction, and the program or the instruction is executed by a processor to implement the processes of the foregoing positioning method embodiment, and a same technical effect can be achieved. To avoid repetition, details are not described herein again.

The processor is a processor in the terminal in the foregoing embodiment. The readable storage medium includes a computer readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the foregoing positioning method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program/program product. The computer program/program product is stored in a storage medium, and the computer program/program product is executed by at least one processor to implement the processes of the foregoing positioning method embodiment, and a same technical effect can be achieved. To avoid repetition, details are not described herein again.

An embodiment of this application further provides a positioning system, including a terminal and a network side device. The terminal may be configured to perform the steps of the positioning method, and the target communication device may be configured to perform the steps of the positioning method.

It should be noted that, in this specification, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are merely illustrative but not restrictive. Under the enlightenment of this application, a person of ordinary skill in the art can make many forms without departing from the purpose of this application and the protection scope of the claims, all of which fall within the protection of this application.

## Claims

1. A positioning method, comprising:
measuring, by a first terminal, a physical sidelink SL positioning reference signal sent by a second terminal; and
sending, by the first terminal, first information to a target communication device based on measurement on the SL positioning reference signal, wherein
the first information comprises at least one of the following:
line-of-sight LOS indication information;
measurement information of the SL positioning reference signal; and
location-related information; and
the target communication device is the second terminal, a preset terminal, a base station device, or a core network device.

2. The positioning method according to claim 1, wherein in a case that the target communication device is the second terminal or a preset terminal, the first information is comprised in at least one of the following:
a physical sidelink control channel PSCCH, a physical sidelink feedback channel PSFCH, a physical sidelink shared channel PSSCH, sidelink control information SCI, a Medium Access Control control element MAC CE, PC5 radio resource control PC5-RRC, a PC5 positioning protocol PC5-LPP, or second sidelink control information SCI.

3. The positioning method according to claim 1, wherein in a case that the target communication device is a base station device or a core network device, the first information is comprised in at least one of the following:
uplink control information UCI, a physical uplink control channel PUCCH, a physical uplink shared channel PUSCH, a Media Access Control control element MAC CE, radio resource control RRC, or a positioning protocol LPP.

4. The positioning method according to any one of claims 1 to 3, wherein the measurement information of the SL positioning reference signal comprises at least one of the following:
identification information and a measurement result of an SL positioning reference signal associated with the identification information, wherein
the identification information comprises at least one of the following:
identification information of at least one first terminal;
identification information of at least one second terminal; and
identification information of at least one SL positioning reference signal.

5. The positioning method according to claim 4, wherein the measurement result comprises at least one of the following:
angle information, wherein the angle information comprises an angle of arrival measurement result and/or an angle of departure measurement result;
time information, wherein the time information comprises at least one of a reference signal time difference measurement result, a round-trip delay measurement result, and a reference signal arrival time; and
energy information, wherein the energy information comprises a reference signal received power RSRP and/or a received signal strength indicator RSSI.

6. The positioning method according to claim 4 or 5, wherein one measurement result is associated with at least one piece of LOS indication information; or one piece of identification information is associated with at least one piece of LOS indication information.

7. The positioning method according to claim 6, wherein the at least one piece of LOS indication information is used to indicate one of the following:
whether the measurement result comprises an LOS path;
a probability that the measurement result comprises an LOS path;
whether an LOS path is comprised between the identification information and a target terminal;
whether an LOS path is comprised between the identification information and the first terminal;
a probability that an LOS path is comprised between the identification information and the second terminal; and
a probability that an LOS path is comprised between the identification information and the first terminal.

8. The positioning method according to claim 7, wherein the LOS indication information comprises at least one of the following:
a first bit part used to indicate LOS or non-line-of-sight NLOS;
a second bit part used to indicate an LOS probability; and
a third bit part used to indicate an LOS confidence.

9. The positioning method according to any one of claims 6 to 8, wherein the measurement result further comprises a measurement result of at least one target path.

10. The positioning method according to claim 9, wherein the measurement result of the at least one target path is associated with at least one piece of LOS indication information; or one piece of LOS indication information is associated with one target path, and different LOS indication information is associated with different target paths.

11. The positioning method according to claim 9 or 10, wherein the measurement result of the at least one target path comprises any one or more of the following:
a measurement result of an LOS path in the at least one target path;
a measurement result of the first target path in the at least one target path;
a measurement result of a target path with strongest energy in the at least one target path;
measurement results of the first N target paths in the at least one target path, wherein N is a positive integer;
measurement results of the first M target paths with highest energy rankings in the at least one target path, wherein M is a positive integer;
a measurement result of a target path whose RSRP is greater than a first threshold in the at least one target path; and
measurement results of Q target paths between the first target path and the target path with strongest energy in the at least one target path, wherein Q is a positive integer, and Q=N-2.

12. The positioning method according to any one of claims 9 to 11, wherein the target path meets at least one of the following:
an RSRP of the target path is greater than a fourth threshold;
the target path is the first path from the second terminal to the first terminal;
the target path is the first path from the second terminal to the first terminal, wherein an RSTD between the first path and a serving cell of the target terminal is less than a fifth threshold;
an LOS threshold of the target path is greater than a sixth threshold; and
a reflection point of the target path is less than R, wherein R is a positive integer.

13. The positioning method according to any one of claims 9 to 12, wherein the method further comprises:
before the measuring, by a first terminal, an SL positioning reference signal sent by a second terminal, sending, by the first terminal, first capability information to the target communication device, wherein the first capability information is used to indicate at least one of the following:
whether reporting of LOS identification information is supported;
whether measurement on per path is supported;
whether measurement on the first path is supported;
whether measurement on an additional path is supported;
the number of supported target paths; and
the number of supported second terminals.

14. The positioning method according to any one of claims 6 to 13, wherein in a case that the LOS indication information associated with the measurement information of the SL positioning reference signal indicates NLOS, the first information further comprises reflection point information, and the reflection point information comprises at least one of the following:
location information of a reflection point;
reflection angle information of a reflection point; and
incident angle information of a reflection point.

15. The positioning method according to claim 14, wherein the reflection point information is associated with first identification information corresponding to the SL positioning reference signal, wherein
the first identification information corresponding to the SL positioning reference signal comprises at least one of the following:
identification information of at least one first terminal corresponding to the SL positioning reference signal;
identification information of at least one second terminal corresponding to the SL positioning reference signal;
at least one piece of panel identification information corresponding to the SL positioning reference signal; and
identification information of at least one SL positioning reference signal corresponding to the SL positioning reference signal.

16. The positioning method according to any one of claims 4 to 15, wherein the measurement information of the SL positioning reference signal further comprises at least one of the following:
second identification information and a measurement result of an SL positioning reference signal associated with the second identification information, wherein
the second identification information comprises at least one of the following:
at least one piece of panel identification information;
at least one piece of panel location information;
at least one piece of panel angle information; and
at least one piece of group ID information.

17. The positioning method according to claim 16, wherein the measurement result of the SL positioning reference signal associated with the second identification information comprises at least one of the following:
a measurement result of an SL positioning reference signal associated with the panel identification information or the panel location information;
a measurement result of an SL positioning reference signal associated with multiple panels;
a measurement result of an SL positioning reference signal associated with a group ID;
first indication information, wherein the indication information is used to indicate that the measurement result of the SL positioning reference signal is for a single panel; and
second indication information, wherein the indication information is used to indicate that the measurement result of the SL positioning reference signal is for multiple panels.

18. The positioning method according to any one of claims 1 to 17, wherein the location-related information comprises at least one of the following:
identification information and location-related information associated with the identification information, wherein
the identification information comprises at least one of the following:
identification information of at least one first terminal;
identification information of at least one second terminal;
at least one piece of panel identification information;
at least one piece of group ID information; and
identification information of at least one SL positioning reference signal; and
the location-related information comprises at least one of the following:
absolute location information; and
relative location information.

19. The positioning method according to claim 18, wherein the location-related information is carried in 2nd SCI.

20. The positioning method according to claim 19, wherein the location-related information is carried in a communication range.

21. The positioning method according to any one of claims 1 to 20, wherein the method further comprises:
sending second information to the target communication device, wherein the second information comprises at least one of the following:
the identification information associated with the measurement result;
the location-related information associated with the identification information associated with the measurement result; and
location information of the target terminal, wherein the target terminal is a terminal whose location needs to be determined.

22. The positioning method according to any one of claims 1 to 20, wherein the method further comprises:
before the measuring, by a first terminal, an SL positioning reference signal sent by a second terminal, receiving, by the first terminal, third information sent by the target communication device, wherein the third information comprises at least one of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

23. The positioning method according to any one of claims 1 to 20, wherein the method further comprises:
before the measuring, by a first terminal, an SL positioning reference signal sent by a second terminal, determining the second terminal, wherein
the second terminal meets at least one of the following:
an Rx time difference between an SL-PRS between the second terminal and the first terminal and a serving cell of the first terminal is within a first threshold;
an Rx time difference between the second terminal and the serving cell of the first terminal is within a second threshold;
a synchronization time difference between the second terminal and the first terminal is within a third threshold;
the second terminal and the first terminal belong to a same synchronization clock;
a measurement result RSRP of the second terminal is greater than a second threshold; and
a measurement result RSTD of the second terminal and the serving cell is less than a third threshold.

24. The positioning method according to any one of claims 1 to 20, wherein the sending, by the first terminal, first information to a target communication device based on measurement on the SL positioning reference signal comprises:
sending, only in a case that an RSRP of the measured SL positioning reference signal is greater than or equal to a threshold N, the first information associated with the SL positioning reference signal; or
sending the first information only in a case that RSRPs of all measured SL positioning reference signals are greater than or equal to the threshold.

25. The positioning method according to claim 24, wherein the method further comprises:
sending third information to the target communication device in a case that the RSRPs of all the measured SL positioning reference signals are less than the threshold N, wherein
the third information comprises at least one of the following:
measurement failure indication information;
information indicating that measured energy is less than a threshold; and
NACK indication information.

26. The positioning method according to any one of claims 1 to 20, wherein the sending, by the first terminal, first information to a target communication device based on measurement on the SL positioning reference signal comprises at least one of the following:
in a case that a zone ID of the target terminal and a zone ID of the second terminal meet a first condition, sending, by the first terminal, the first information to the target communication device;
in a case that a communication range of the target terminal and a communication range of the second terminal meet a second condition, sending, by the first terminal, the first information to the target communication device;
in a case that a zone ID of the first terminal and a zone ID of the second terminal meet a first condition, sending, by the first terminal, the first information to the target communication device; or
in a case that a communication range of the first terminal and a communication range of the second terminal meet a second condition, sending, by the first terminal, the first information to the target communication device.

27. A positioning method, comprising:
receiving, by a target communication device, first information, wherein the first information is sent by a first terminal based on measurement on an SL positioning reference signal sent by a second terminal, wherein
the first information comprises at least one of the following:
line-of-sight LOS indication information;
measurement information of the SL positioning reference signal; and
location-related information; and
the target communication device is the second terminal, a preset terminal, a base station device, or a core network device.

28. The positioning method according to claim 27, wherein the method further comprises:
before the receiving first information, receiving, by the target communication device, first capability information sent by the first terminal, wherein the first capability information is used to indicate at least one of the following:
whether reporting of LOS identification information is supported;
whether measurement on per path is supported;
whether measurement on the first path is supported;
whether measurement on an additional path is supported;
the number of supported target paths; and
the number of supported second terminals.

29. The positioning method according to claim 27 or 28, wherein the method further comprises:
before the receiving first information, sending third information to the first terminal, wherein the third information comprises at least one of the following:
LOS indication information;
first request information, used to request LOS indication information to be reported;
second request information, used to request target path information to be reported;
third request information, used to request the number of target paths;
fourth request information, used to request a reflection point location to be reported;
fifth request information, used to request the location-related information;
sixth request information, used to request the number of second terminals;
seventh request information, used to indicate a preset condition for the second terminal to feed back the first information; and
eighth request information, used to indicate a preset condition of a target path corresponding to target path information.

30. A positioning apparatus, comprising:
a measurement module, configured to measure a physical sidelink SL positioning reference signal sent by a second terminal; and
a first sending module, configured to send first information to a target communication device based on measurement on the SL positioning reference signal, wherein
the first information comprises at least one of the following:
line-of-sight LOS indication information;
measurement information of the SL positioning reference signal; and
location-related information; and
the target communication device is the second terminal, a preset terminal, a base station device, or a core network device.

31. The positioning apparatus according to claim 30, wherein in a case that the target communication device is the second terminal or a preset terminal, the first information is comprised in at least one of the following:
a physical sidelink control channel PSCCH, a physical sidelink feedback channel PSFCH, a physical sidelink shared channel PSSCH, sidelink control information SCI, a Medium Access Control control element MAC CE, PC5 radio resource control PC5-RRC, a PC5 positioning protocol PC5-LPP, or second sidelink control information SCI.

32. The positioning apparatus according to claim 30, wherein in a case that the target communication device is a base station device or a core network device, the first information is comprised in at least one of the following:
uplink control information UCI, a physical uplink control channel PUCCH, a physical uplink shared channel PUSCH, a Media Access Control control element MAC CE, radio resource control RRC, or a positioning protocol LPP.

33. The positioning apparatus according to any one of claims 30 to 32, wherein the measurement information of the SL positioning reference signal comprises at least one of the following:
identification information and a measurement result of an SL positioning reference signal associated with the identification information, wherein
the identification information comprises at least one of the following:
identification information of at least one first terminal;
identification information of at least one second terminal; and
identification information of at least one SL positioning reference signal.

34. The positioning apparatus according to claim 33, wherein the measurement result comprises at least one of the following:
angle information, wherein the angle information comprises an angle of arrival measurement result and/or an angle of departure measurement result;
time information, wherein the time information comprises at least one of a reference signal time difference measurement result, a round-trip delay measurement result, and a reference signal arrival time; and
energy information, wherein the energy information comprises a reference signal received power RSRP and/or a received signal strength indicator RSSI.

35. The positioning apparatus according to claim 33 or 34, wherein one measurement result is associated with at least one piece of LOS indication information; or one piece of identification information is associated with at least one piece of LOS indication information.

36. The positioning apparatus according to claim 35, wherein the at least one piece of LOS indication information is used to indicate one of the following:
whether the measurement result comprises an LOS path;
a probability that the measurement result comprises an LOS path;
whether an LOS path is comprised between the identification information and a target terminal;
whether an LOS path is comprised between the identification information and the first terminal;
a probability that an LOS path is comprised between the identification information and the second terminal; and
a probability that an LOS path is comprised between the identification information and the first terminal.

37. The positioning apparatus according to claim 36, wherein the LOS indication information comprises at least one of the following:
a first bit part used to indicate LOS or non-line-of-sight NLOS;
a second bit part used to indicate an LOS probability; and
a third bit part used to indicate an LOS confidence.

38. The positioning apparatus according to any one of claims 35 to 37, wherein the measurement result further comprises a measurement result of at least one target path.

39. The positioning apparatus according to any one of claims 35 to 38, wherein in a case that the LOS indication information associated with the measurement information of the SL positioning reference signal indicates NLOS, the first information further comprises reflection point information, and the reflection point information comprises at least one of the following:
location information of a reflection point;
reflection angle information of a reflection point; and
incident angle information of a reflection point.

40. The positioning apparatus according to any one of claims 33 to 39, wherein the measurement information of the SL positioning reference signal further comprises at least one of the following:
second identification information and a measurement result of an SL positioning reference signal associated with the second identification information, wherein
the second identification information comprises at least one of the following:
at least one piece of panel identification information;
at least one piece of panel location information;
at least one piece of panel angle information; and
at least one piece of group ID information.

41. The positioning apparatus according to any one of claims 30 to 40, wherein the location-related information comprises at least one of the following:
identification information and location-related information associated with the identification information, wherein
the identification information comprises at least one of the following:
identification information of at least one first terminal;
identification information of at least one second terminal;
at least one piece of panel identification information;
at least one piece of group ID information; and
identification information of at least one SL positioning reference signal; and
the location information comprises at least one of the following:
absolute location information; and
relative location information.

42. A positioning apparatus, comprising:
a second receiving module, configured to receive first information, wherein the first information is sent by a first terminal based on measurement on an SL positioning reference signal sent by a second terminal, wherein
the first information comprises at least one of the following:
line-of-sight LOS indication information;
measurement information of the SL positioning reference signal; and
location-related information; and
the target communication device is the second terminal, a preset terminal, a base station device, or a core network device.

43. A first terminal, comprising a processor and a memory, wherein the memory stores a program or an instruction that can be run on the processor, and the program or the instruction is executed by the processor to implement the steps of the positioning method according to any one of claims 1 to 26.

44. A target communication device, comprising a processor and a memory, wherein the memory stores a program or an instruction that can be run on the processor, and the program or the instruction is executed by the processor to implement the steps of the positioning method according to any one of claims 27 to 29.

45. A readable storage medium, wherein the readable storage medium stores a program or an instruction, and the program or the instruction is executed by a processor to implement the steps of the positioning method according to any one of claims 1 to 26 or the steps of the positioning method according to any one of claims 27 to 29.
